(19) Europäisches Patentamt
European Patent Office
Office européen des brevets

(11) **EP 4 319 358 A1**

(12) **EUROPEAN PATENT APPLICATION**
published in accordance with Art. 153(4) EPC

(43) Date of publication:
**07.02.2024 Bulletin 2024/06**

(21) Application number: **21933150.1**

(22) Date of filing: **26.03.2021**

(51) International Patent Classification (IPC):
***H04W 72/02*** *(2009.01)* ***H04W 72/04*** *(2023.01)*

(52) Cooperative Patent Classification (CPC):
**H04W 72/02; H04W 72/04**

(86) International application number:
**PCT/JP2021/013116**

(87) International publication number:
**WO 2022/201549 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
- **YOSHIOKA, Shohei**
  **Tokyo 100-6150 (JP)**
- **SHIBAIKE, Naoya**
  **Tokyo 100-6150 (JP)**
- **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57) A terminal includes a reception unit configured to perform partial sensing in a resource pool; a control unit configured to select one or more slots that are candidates for resource selection from a resource selection window in the resource pool; and a transmission unit configured to select a resource that is used for transmission from the one or more slots that are the candidates based on a result of the partial sensing. The control unit is configured to control an end timing of slots that are targets of the partial sensing, a timing at which the transmission unit selects the resource, and a beginning timing of the one or more slots that are the candidates.

FIG.21

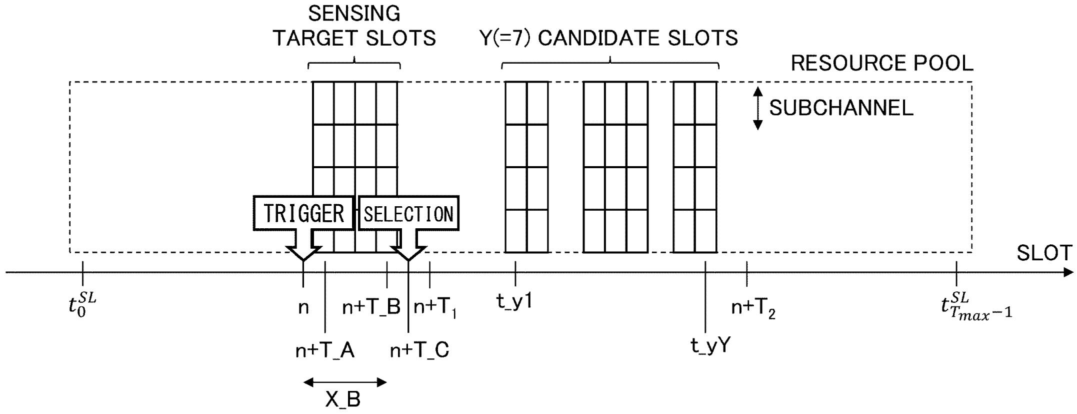


EP 4 319 358 A1

## Description

### TECHNICAL FIELD

The present invention relates to a terminal and a communication method in a wireless communication system.

### BACKGROUND ART

LTE (Long Term Evolution) and successor systems of LTE (for example, LTE-A (LTE Advanced), NR (New Radio) (also referred to as 5G)) are known. D2D (Device to Device) technology in which terminals directly communicate with each other without intervention of a base station has been studied (for example, Non-Patent Document 1).

D2D reduces traffic between a terminal and a base station, and enables communication between terminals even when a base station becomes unable to perform communication due to a disaster or the like. Although 3GPP (3rd Generation Partnership Project) refers to D2D as a "sidelink", the more general term "D2D" is used herein. However, in the following description of the embodiment, a "sidelink" is also used as necessary.

D2D communication is generally classified into D2D discovery for discovering other communicable terminals and D2D communication for direct communication between terminals (also referred to as D2D direct communication, D2D communication, terminal-to-terminal direct communication, or the like). Hereinafter, when D2D communication, D2D discovery, and the like are not particularly distinguished from each other, they are simply referred to as D2D. A signal transmitted and received in D2D is called a D2D signal. Various use cases of services related to V2X (Vehicle to Everything) in NR have been studied (for example, Non-Patent Document 2).

[Related Art Document]

[Non-Patent Document]

[Non-Patent Document 1] 3GPP TS 38.211 V16. 4.0 (2020-12)

[Non-Patent Document 2] 3GPP TR 22.886 V15. 1.0 (2017-03)


### SUMMARY OF THE INVENTION

### PROBLEMS TO BE SOLVED BY THE INVENTION

For the purpose of enhancement of NR sidelink, power saving has been studied. For example, in Resource allocation mode 2 in which a terminal autonomously selects a resource, the terminal performs partial sensing in which sensing is performed on limited resources in a sensing window, and selects an available resource candidate from a resource selection window based on a result of the partial sensing.

When a terminal autonomously performs resource selection by partial sensing, if an attempt is made to secure a UE processing time, there is a possibility that the performance of a resource identification operation by partial sensing may be degraded.

The present invention has been made in view of the above points, and has an object to improve reliability concerning sensing when autonomously selecting a resource during device-to-device direct communication.

### MEANS FOR SOLVING THE PROBLEM

According to the disclosed technology, a terminal is provided. The terminal includes a reception unit configured to perform partial sensing on a resource pool; a control unit configured to select one or more slots that are candidates for resource selection from a resource selection window in the resource pool; and a transmission unit configured to select, based on a result of the partial sensing, a resource that is used for transmission from the one or more slots that are the candidates. The control unit is configured to control an end timing of slots that are targets of the partial sensing, a timing at which the transmission unit selects the resource, and a start timing of the one or more slots that are the candidates.

### ADVANTAGEOUS EFFECTS OF THE INVENTION

According to the disclosed technology, it is possible to improve reliability concerning sensing at autonomous resource selection in terminal-to-terminal direct communication.

## BRIEF DESCRIPTION OF THE DRAWINGS

[FIG. 1] FIG. 1 is a diagram illustrating V2X.
[FIG. 2] FIG. 2 is a diagram illustrating an example (1) of a transmission mode of V2X.
[FIG. 3] FIG. 3 is a diagram illustrating an example (2) of a transmission mode of V2X.
[FIG. 4] FIG. 4 is a diagram illustrating an example (3) of the transmission mode of V2X.
[FIG. 5] FIG. 5 is a diagram illustrating an example (4) of the transmission mode of V2X.
[FIG. 6] FIG. 6 is a diagram illustrating an example (5) of a transmission mode of V2X.
[FIG. 7] FIG. 7 is a diagram illustrating an example (1) of a communication type of V2X.
[FIG. 8] FIG. 8 is a diagram illustrating an example (2) of a communication type of V2X.
[FIG. 9] FIG. 9 is a diagram illustrating an example (3) of a communication type of V2X.
[FIG. 10] FIG. 10 is a sequence diagram depicting an operation example (1) of V2X.
[FIG. 11] FIG. 11 is a sequence diagram depicting an operation example (2) of V2X.
[FIG. 12] FIG. 12 is a sequence diagram depicting an operation example (3) of V2X.
[FIG. 13] FIG. 13 is a sequence diagram depicting an operation example (4) of V2X.
[FIG. 14] FIG. 14 is a diagram depicting an example of a sensing operation.
[FIG. 15] FIG. 15 is a flowchart illustrating an example of a preemption operation.
[FIG. 16] FIG. 16 is a diagram illustrating an example of a preemption operation.
[FIG. 17] FIG. 17 is a diagram depicting an example of a partial sensing operation.
[FIG. 18] FIG. 18 is a diagram illustrating an example (1) of a partial sensing operation.
[FIG. 19] FIG. 19 is a diagram illustrating an example (2) of a partial sensing operation.
[FIG. 20] FIG. 20 is a diagram illustrating an example (3) of a partial sensing operation.
[FIG. 21] FIG. 21 is a diagram illustrating an example (1) of a partial sensing operation according to an embodiment of the present invention.
[FIG. 22] FIG. 22 is a diagram illustrating an example (2) of a partial sensing operation in the embodiment of the present invention.
[FIG. 23] FIG. 23 is a diagram illustrating an example (3) of a partial sensing operation in the embodiment of the present invention.
[FIG. 24] FIG. 24 is a diagram illustrating an example (4) of a partial sensing operation in the embodiment of the present invention.
[FIG. 25] FIG. 25 is a diagram depicting an example of a functional configuration of a base station 10 according to the embodiment of the present invention.
[FIG. 26] FIG. 26 is a diagram depicting an example of a functional configuration of a terminal 20 according to the embodiment of the present invention.
[FIG. 27] FIG. 27 is a diagram depicting an example of a hardware configuration of the base station 10 or the terminal 20 according to the embodiment of the present invention.

## MODE FOR CARRYING OUT THE INVENTION

Hereinafter, the embodiment of the present invention will be described with reference to the drawings. It should be noted that the embodiment described below are merely examples, and embodiments to which the present invention is applied are not limited to the following embodiment.

With regard to operations of wireless communication systems according to the embodiment of the present invention, an existing technology is appropriately used. However, the existing technology is, for example, the existing LTE, but is not limited to the existing LTE. In addition, the term "LTE" used in the present specification has a broad meaning denoting LTE-Advanced, a scheme after LTE-Advanced (example, NR), or a wireless local area network (LAN) unless otherwise specified.

Further, in the embodiment of the present invention, a duplex scheme may be a TDD (Time Division Duplex) scheme, a FDD (Frequency Division Duplex) scheme, or another scheme (for example, Flexible Duplex).

In addition, in the embodiment of the present invention, an expression that a radio parameter or the like is "configured" may mean that a predetermined value may be pre-configured or that a radio parameter notified from a base station 10 or a terminal 20 may be configured.

FIG. 1 is a diagram illustrating V2X. In 3GPP, realization of V2X (Vehicle to Everything) or eV2X (enhanced V2X) by extending a D2D function has been studied and preparation of Specifications thereof has been advanced. As depicted in FIG. 1, V2X is part of ITS (Intelligent Transport Systems) and is a generic name for V2V (Vehicle to Vehicle) meaning a communication mode performed between vehicles, V2I (Vehicle to Infrastructure) meaning a communication mode performed between a vehicle and a RSU (Road-Side Unit) installed beside a road, V2N (Vehicle to Network) meaning a communication mode performed between a vehicle and an ITS server, and V2P (Vehicle to Pedestrian) meaning a communication mode performed between a vehicle and a mobile terminal carried by a pedestrian.

In addition, in 3GPP, V2X using LTE or NR cellular communication and terminal-to-terminal communication has been studied. A V2X using cellular communication is also called a cellular V2X. In V2X of NR, studies are underway to realize high-capacity, low-delay, high-reliability, and QoS (Quality of Service) control.

Regarding V2X of LTE or NR, it is expected that a study not limited to the 3GPP Specifications will be advanced in the future. For example, it is expected that consideration will be given to securing interoperability, reducing costs by implementing an upper layer, using a plurality of radio access technologies (RATs) together or a method of switching thereamong, complying with regulations in each country, and methods of acquisition, distribution, database management, and usage of data of LTE or NR V2X platforms.

In the embodiment of the present invention, a mode in which a communication apparatus is mounted on a vehicle is mainly expected, but embodiments of the present invention are not limited to this mode. For example, the communication apparatus may be a terminal held by a person, the communication apparatus may be an apparatus mounted on a drone or an aircraft, or the communication apparatus may be a base station, an RSU, a relay station (relay node), a terminal having a scheduling capability, or the like.

SL (Sidelink) may be distinguished based on UL (Uplink) or DL (Downlink) and any one of or a combination of 1) to 4) below. In addition, SL may be another name.

1) time domain resource allocation
2) frequency domain resource configuration
3) a synchronization signal to refer to (that may be a sidelink synchronization signal (SLSS))
4) a reference signal used for path loss measurement for transmission power control

Further, with respect to OFDM (Orthogonal Frequency Division Multiplexing) of SL or UL, any one of CP-OFDM (Cyclic-Prefix OFDM), DFT-S-OFDM (Discrete Fourier Transform-Spread-OFDM), OFDM not Transform precoded, and Transform-precoded OFDM may be applied.

In SL of LTE, Mode3 and Mode4 are prescribed for resource allocation of SLs to a terminal 20. In Mode3, a transmission resource is dynamically allocated according to DCI (Downlink Control Information) transmitted from a base station 10 to a terminal 20. In Mode3, also SPS (Semi Persistent Scheduling) is possible. In Mode4, a terminal 20 autonomously selects a transmission resource from a resource pool.

Note that a slot in the embodiment of the present invention may be replaced with a symbol, a minislot, a subframe, a radio frame, or a TTI (Transmission Time Interval). Furthermore, a cell in the embodiment of the present invention may be replaced with a cell group, a carrier component, a BWP, a resource pool, a resource, a radio access technology (RAT), a system (including a wireless LAN), or the like.

In the embodiment of the present invention, a terminal 20 is not limited to a V2X terminal, and may be any type of terminal that performs D2D communication. For example, a terminal 20 may be a terminal carried by a user such as a smartphone, or may be an IoT (Internet of Things) apparatus such as a smart meter.

FIG. 2 is a diagram illustrating an example (1) of a transmission mode of V2X. In the transmission mode of sidelink communication depicted in FIG. 2, in step 1, a base station 10 transmits sidelink scheduling to a terminal 20A. Subsequently, the terminal 20A transmits a physical sidelink control channel (PSCCH) and a physical sidelink shared channel (PSSCH) to a terminal 20B on the basis of the received scheduling (step 2). The transmission mode of the sidelink communication depicted in FIG. 2 may be called Sidelink transmission mode 3 in LTE. In Sidelink transmission mode 3 in LTE, Uu-based sidelink scheduling is performed. The Uu is a radio interface between a UTRAN (Universal Terrestrial Radio Access Network) and a UE (User Equipment). The transmission mode of the sidelink communication illustrated in FIG. 2 may be called Sidelink transmission mode 1 in NR.

FIG. 3 is a diagram illustrating an example (2) of the transmission mode of V2X. In the transmission mode of sidelink communication depicted in FIG. 3, in step 1, a terminal 20A transmits a PSCCH and a PSSCH to a terminal 20B using a resource that the terminal 20A has autonomously selected. The transmission mode of the sidelink communication depicted in FIG. 3 may be called Sidelink transmission mode 4 in LTE. In Sidelink transmission mode 4 in LTE, a UE itself performs resource selection.

FIG. 4 is a diagram illustrating an example (3) of the transmission mode of V2X. In the transmission mode of the sidelink communication depicted in FIG. 4, in step 1, a terminal 20A transmits a PSCCH and a PSSCH to a terminal 20B using a resource that the terminal 20A has autonomously selected. Similarly, the terminal 20B transmits a PSCCH and a PSSCH to the terminal 20A using a resource that the terminal 20B has autonomously selected (step 1). The transmission mode of sidelink communication depicted in FIG. 4 may be called Sidelink transmission mode 2a in NR.

In Sidelink transmission mode 2 in NR, a terminal 20 itself performs resource selection.

FIG. 5 is a diagram illustrating an example (4) of the transmission mode of V2X. In the transmission mode of sidelink communication depicted in FIG. 5, a resource pattern of sidelink is transmitted from a base station 10 to a terminal 20A via RRC (Radio Resource Control) configuration in step 0,s or is preconfigured. Next, the terminal 20A transmits a PSSCH to a terminal 20B based on the resource pattern (step 1). The transmission mode of sidelink communication depicted in FIG. 5 may be called Sidelink transmission mode 2c in NR.

FIG. 6 is a diagram illustrating an example (5) of the transmission mode of V2X. In the transmission mode of sidelink communication depicted in FIG. 6, in step 1, a terminal 20A transmits sidelink scheduling to a terminal 20B via a PSCCH. Next, the terminal 20B transmits a PSSCH to the terminal 20A based on the received scheduling (step 2). The transmission mode of sidelink communication depicted in FIG. 6 may be called Sidelink transmission mode 2d in NR.

FIG. 7 is a diagram illustrating an example (1) of communication type of V2X. The communication type of sidelink depicted in FIG. 7 is unicast. A terminal 20A transmits a PSCCH and a PSSCH to terminals 20. In the example depicted in FIG. 7, the terminal 20A performs unicast for a terminal 20B and performs unicast for a terminal 20C.

FIG. 8 is a diagram illustrating an example (2) of the communication type of V2X. The communication type of sidelink depicted in FIG. 8 is groupcast. A terminal 20A transmits a PSCCH and a PSSCH to a group to which one or more terminals 20 belong. In the example depicted in FIG. 8, the group includes a terminal 20B and a terminal 20C, and the terminal 20A performs groupcast for the group.

FIG. 9 is a diagram illustrating an example (3) of the communication type of V2X. The communication type of sidelink depicted in FIG. 9 is broadcast. A terminal 20A transmits a PSCCH and a PSSCH to one or more terminals 20. In the example illustrated in FIG. 9, the terminal 20A performs broadcast for a terminal 20B, a terminal 20C, and a terminal 20D. The terminals 20A illustrated in FIGS. 7 to 9 may be referred to as header-UEs.

In addition, in NR-V2X, HARQ (Hybrid automatic repeat request) is expected as being supported with respect to unicast and groupcast of sidelink. Furthermore, in NR V2X, SFCI (Sidelink Feedback Control Information) including HARQ response is defined. Furthermore, it has been studied that SFCI is transmitted via a PSFCH (Physical Sidelink Feedback Channel).

In the following description, a PSFCH is used in transmission of HARQ-ACK in sidelink, but this is merely an example. For example, transmission of HARQ-ACK in sidelink may be performed using a PSCCH, transmission of HARQ-ACK in sidelink may be performed using a PSSCH, or transmission of HARQ-ACK in sidelink may be performed using another channel.

Hereinafter, for convenience, information reported by a terminal 20 with respect to HARQ is overall referred to as HARQ-ACK. HARQ-ACK may be referred to as HARQ-ACK information. More specifically, a codebook applied to HARQ-ACK information reported from a terminal 20 to a base station 10 or the like is referred to as a HARQ-ACK codebook. The HARQ-ACK codebook defines a bit sequence of HARQ-ACK information. In addition to ACK, NACK is also transmitted by "HARQ-ACK".

FIG. 10 is a sequence diagram illustrating an operation example (1) of V2X. As depicted in FIG. 10, a wireless communication system according to the embodiment of the present invention may include a terminal 20A and a terminal 20B. Although there are actually a large number of user apparatuses, FIG. 10 depicts the terminals 20A and 20B as examples.

Hereinafter, when terminals 20A, 20B, and the like are not particularly distinguished from each other, they are simply referred to as "terminals 20" or "user apparatuses". Although FIG. 10 depicts a case where both the terminal 20A and the terminal 20B are within the coverage of a cell as an example, the operations in the embodiment of the present invention can be applied to a case where the terminal 20B is out of the coverage.

As described above, in the present embodiment, the terminals 20 are, for example, terminals mounted on vehicles such as automobiles, and have cellular communication functions as UEs in LTE or NR and sidelink functions. The terminals 20 may be general mobile terminals (such as smartphones). Also, the terminals 20 may be RSUs. The RSUs may be UE type RSUs having functions of UEs, or may be gNB type RSUs having functions of base station apparatuses.

Note that the terminals 20 do not need to be single housing apparatuses. For example, even in a case where various sensors are arranged in a distributed manner in vehicles apparatuses including the various sensors may be the terminals 20.

The contents of processing of transmission data of sidelink of the terminals 20 are basically the same as the contents of processing of UL transmission in LTE or NR. For example, a terminal 20 scrambles and modulates codewords of transmission data to generate complex-valued symbols, maps the complex-valued symbols (transmission signal) to one or two layers, and performs precoding. Then, the precoded complex-valued symbols are mapped to resource elements to generate a transmission signal (e.g., complex-valued time-domain SC-FDMA signal), and the transmission signal is transmitted from each antenna port.

Note that a base station 10 has a cellular communication function as a base station in LTE or NR and functions (of, for example, resource pool configuration, resource allocation, and the like) for enabling communication with a terminal 20 in the present embodiment. Further, the base station 10 may be an RSU (gNB type RSU).

Furthermore, in a radio communication system according to the embodiment of the present invention, a signal waveform used by a terminal 20 for SL or UL may be of OFDMA, of SC-FDMA, or another signal waveform.

In step S101, a terminal 20A autonomously selects a resource to be used for a PSCCH and a PSSCH from a resource selection window having a predetermined period. The resource selection window may be configured in a terminal 20 by a base station 10. The above-mentioned predetermined period of the resource selection window may be prescribed in accordance with an implementation condition of the terminal, such as a processing time or a maximum permissible packet delay time, or the predetermined period may be prescribed in advance in a Specification, and the predetermined period may be referred to as an interval with respect to a time domain.

In step S102 and step S103, the terminal 20A transmits sidelink control information (SCI) through the PSCCH and/or the PSSCH and transmits SL data through the PSSCH using the resource autonomously selected in step S101. For example, the terminal 20A may transmit the PSCCH using the same time resource as at least a part of the time resource of the PSSCH and using a frequency resource adjacent to the frequency resource of the PSSCH.

The terminal 20B receives the SCI (PSCCH and/or PSSCH) and the SL data (PSSCH) transmitted from the terminal 20A. The received SCI may include information of a resource of PSFCH for the terminal 20B to transmit HARQ-ACK in response to the data transmission. The terminal 20A may include information of the autonomously selected resource in the SCI and transmit it.

In step S104, the terminal 20B transmits HARQ-ACK to the terminal 20A in response to the received data using a resource of PSFCH determined from the received SCI.

In step S105, the terminal 20A retransmits a PSCCH and a PSSCH to the terminal 20B when the HARQ-ACK received in step S104 indicates that retransmission is requested, that is, when the HARQ-ACK is NACK (negative acknowledgement). The terminal 20A may retransmit a PSCCH and a PSSCH using a resource that the terminal 20A has autonomously selected.

When the HARQ control accompanied by the HARQ feedback is not executed, step S104 and step S105 need not be executed.

FIG. 11 is a sequence diagram illustrating an operation example (2) of V2X. Blind retransmission without performing HARQ control may be performed to improve the transmission success rate or the transmission range.

In step S201, the terminal 20A autonomously selects a resource to be used for a PSCCH and a PSSCH from a resource selection window having a predetermined period. The resource selection window may be configured in a terminal 20 by a base station 10.

In steps S202 and S203, the terminal 20A transmits SCI through the PSCCH and/or the PSSCH and transmits SL data through the PSSCH using the resource autonomously selected in step S201. For example, the terminal 20A may transmit the PSCCH using the same time resource as at least a part of the time resource of the PSSCH and using a frequency resource adjacent to the frequency resource of the PSSCH.

In step S204, the terminal 20A retransmits SCI via the PSCCH and/or the PSSCH and the SL data via the PSSCH to the terminal 20B using the resource autonomously selected in step S201. The retransmission in step S204 may be performed a plurality of times.

When the blind retransmission is not performed, step S204 need not be performed.

FIG. 12 is a sequence diagram illustrating an operation example (3) of V2X. A base station 10 may perform sidelink scheduling. That is, the base station 10 may determine a resource of sidelink to be used by a terminal 20 and transmit information indicating the resource to the terminal 20. Further, when HARQ control accompanied by HARQ feedback is applied, the base station 10 may transmit information indicating a resource of a PSFCH to the terminals 20.

In step S301, a base station 10 performs SL scheduling by transmitting DCI (Downlink Control Information) to a terminal 20A through a PDCCH. Hereinafter, for convenience, DCI for SL scheduling is referred to as SL scheduling DCI.

In addition, in step S301, it is expected that the base station 10 also transmits DCI for DL scheduling (which may be referred to as DL allocation) to the terminal 20A through a PDCCH. Hereinafter, for convenience, DCI for DL scheduling is referred to as DL scheduling DCI. The terminal 20A that has received the DL scheduling DCI receives the DL data through a PDSCH using a resource designated by the DL scheduling DCI.

In step S302 and step S303, the terminal 20A transmits sidelink control information (SCI) through a PSCCH and/or a PSSCH and also transmits SL-data through the PSSCH by using a resource designated by the SL-scheduling DCI. Note that only the resource of the PSSCH may be designated in the SL scheduling DCI. In this case, for example, the terminal 20A may transmit the PSCCH using the same time resource as at least a part of the time resource of the PSSCH and using a frequency resource adjacent to a frequency resource of the PSSCH.

The terminal 20B receives the SCI (PSCCH and/or PSSCH) and the SL data (PSSCH) transmitted from the terminal 20A. The SCI received through the PSCCH and/or the PSSCH includes information of a resource of PSFCH for the terminal 20B to transmit HARQ-ACK in response to the data reception.

The above-mentioned information of the resource is included in the DL scheduling DCI or the SL scheduling DCI transmitted from the base station 10 in step S301, and the terminal 20A acquires the information of the resource from the DL scheduling DCI or the SL scheduling DCI and includes the information of the resource in the SCI. Alternatively, it is also possible that the information of the resource is not included in the DCI transmitted from the base stations 10, and the terminal 20A autonomously transmits the information of the resource by including the information of the resource in the SCI.

In step S304, the terminal 20B transmits HARQ-ACK in response to the received data to the terminal 20A by using the resource of the PSFCH determined from the received SCI.

In step S305, the terminal 20A transmits HARQ-ACK, using, for example, a resource of a PUCCH (Physical uplink control channel) designated by the DL scheduling DCI (or the SL scheduling DCI) at a timing (for example, a timing in slot units) designated by the DL scheduling DCI (or the SL scheduling DCI), and the base station 10 receives the HARQ-ACK. The codebook of the HARQ-ACK may include the HARQ-ACK received from the terminal 20B or HARQ generated based on a PSFCH that has not been received, and HARQ-ACK in response to DL data. However, when there is no allocation of DL data or the like, HARQ-ACK in response to DL data is not included. According to NR Rel. 16, the HARQ-ACK codebook does not include HARQ-ACK in response to DL data.

Note that when HARQ control accompanied by HARQ feedback is not executed, step S304 and/or step S305 need not be executed.

FIG. 13 is a sequence diagram illustrating an operation example (4) of V2X. As described above, in sidelink of NR, it is supported that a HARQ response is transmitted through a PSFCH. As a format of a PSFCH, for example, a format similar to a PUCCH (Physical Uplink Control Channel) format 0 can be used. That is, the format of PSFCH may be a sequence-based format in which a physical resource block (PRB) size is 1 and ACK and NACK are identified by a difference in sequence and/or cyclic shift. The format of PSFCH is not limited to this. A resource of a PSFCH may be arranged at the last symbol or a last plurality of symbols of a slot. Also, a period N is configured or prescribed for a resource of a PSFCH. The period N may be configured or prescribed on a per-slot basis.

In FIG. 13, the vertical axis corresponds to a frequency domain and the horizontal axis corresponds to a time domain. A PSCCH may be arranged in one symbol at the head of a slot, may be arranged in a plurality of symbols from the head, or may be arranged in a plurality of symbols from a symbol other than the head. A PSFCH may be arranged in one symbol at the end of a slot or may be arranged in a plurality of symbols at the end of a slot. Regarding the "head of a slot" and the "end of a slot" described above, consideration of a symbol for automatic gain control (AGC) and a symbol for transmission/reception switching may be omitted. That is, for example, when one slot includes 14 symbols, "the head of the slot" and "the end of the slot" may mean, from among 12 symbols left after the head and the end symbols are excluded, head and end symbols, respectively. In the example illustrated in FIG. 13, three subchannels are configured in a resource pool, and two PSFCHs are arranged in the third slot from the slot in which a PSSCH is arranged. The arrows from the PSSCH to the PSFCHs indicate an example of the PSFCHs that are associated with the PSSCH.

When a HARQ response in groupcast of NR V2X is in accordance with groupcast option 2 of transmitting ACK or NACK, it is necessary to determine resources used for transmitting and receiving a PSFCH. As depicted in FIG. 13, in step S401, a terminal 20A, which is a terminal 20 on the transmitting side, performs groupcast for terminals 20B, 20C, and 20D, which are terminals 20 on the receiving side, via a SL-SCH. In the following step S402, the terminal 20B uses a PSFCH #B, the terminal 20C uses a PSFCH #C, and the terminal 20D uses a PSFCH #D to transmit HARQ responses to the terminal 20A. As illustrated in the example of FIG. 13, when the number of available PSFCH resources is smaller than the number of reception-side terminals 20 belonging to the group, it is necessary to determine how to allocate the PSFCH resources. The transmission-side terminal 20 may know the number of reception-side terminals 20 in groupcast. In accordance with groupcast option 1, only NACK is transmitted as a HARQ response, and ACK is not transmitted.

FIG. 14 is a diagram illustrating an example of a sensing operation in NR. In Resource allocation mode 2, a terminal 20 selects a resource and performs transmission. As depicted in FIG. 14, the terminal 20 performs sensing on a sensing window in a resource pool. Through sensing, the terminal 20 receives a resource reservation field or a resource assignment field included in SCI transmitted from another terminal 20, and identifies available resource candidates included in a resource selection window of the resource pool based on the field. Subsequently, the terminal 20 randomly selects a resource from the available resource candidates.

As depicted in FIG. 14, resource pool configuration may have a period. For example, the period may be 10240 milliseconds. FIG. 14 is an example in which a resource pool is configured to have a range from a slot $t_0^{SL}$ to a slot $t_{Tmax-1}^{SL}$. In the resource pool in each period, an area may be configured by, for example, a bitmap manner.

As illustrated in FIG. 14, it is assumed that a transmission trigger in a terminal 20 occurs in a slot n and the priority of the transmission is $p_{TX}$. In the sensing window from the slot n - $T_0$ to the slot immediately preceding the slot n - $T_{proc,0}$, for example, the terminal 20 can detect that another terminal 20 is performing transmission of the priority $p_{RX}$. When SCI is detected in the sensing window and RSRP (Reference Signal Received Power) exceeds a threshold, a resource in the resource selection window corresponding to the SCI is excluded. When SCI is detected in the sensing window and RSRP is less than the threshold, a resource in the resource selection window corresponding to the SCI is not excluded. The threshold may be, for example, a threshold $Th_{pTx,pRx}$ configured or prescribed for each resource in the sensing window based on the priority $p_{TX}$ and the priority $p_{RX}$.

In addition, as in the slot $t_m^{SL}$ illustrated in FIG. 14, for example, resources in the resource selection window that are candidates in accordance with resource reservation information corresponding to resources in the sensing window that have not been monitored because of transmission are excluded.

In the resource selection window from slot n + $T_1$ to slot n + $T_2$, as depicted in FIG. 14, resources occupied by other UEs are identified, and resources left after the identified resources are excluded are available resource candidates. Assuming that a set of the available resource candidates is $S_A$, when $S_A$ is less than 20% of the resource selection window, the threshold $Th_{pTx,pRx}$ configured for each resource in the sensing window may be increased by 3 dB, and resource identification may be performed again. That is, by thus increasing the threshold $Th_{pTx,pRx}$ and executing identification of resources again, the resources that are left after the exclusion because the RSRP is less than the threshold may be increased so that the set $S_A$ of resource candidates becomes 20% or more of the resource selection window. When the $S_A$ is less than 20% of the resource selection window, the operation of increasing the threshold $Th_{pTx,pRx}$ configured for each resource of the sensing window by 3 dB and performing identification of resources again may be repeated.

The lower layer of the terminal 20 may notify the upper layer of $S_A$. The upper layer of the terminal 20 may determine a resource to be used by performing random selection on $S_A$. The terminal 20 may perform sidelink transmission by using the determined resource.

Although the operations of the transmission-side terminal 20 have been described with reference to FIG. 14, a reception-side terminal 20 may detect data transmission from another terminal 20 on the basis of a result of sensing or partial sensing and receive the data from the other terminal 20.

FIG. 15 is a flowchart illustrating an example of preemption in NR. FIG. 16 is a diagram illustrating an example of preemption in NR. In step S501, a terminal 20 performs sensing on a sensing window. When the terminal 20 performs a power saving operation, the sensing may be executed in a limited period that is prescribed in advance. Subsequently, the terminal 20 identifies each resource included in a resource selection window based on the sensing result, determines a set $S_A$ of resource candidates, and selects a resource to be used for transmission (S502). Subsequently, the terminal 20 selects, from the resource candidate set $S_A$, a resource set (r_0, r_1, ...) for which preemption is determined (S503). The resource set may be notified from the upper layer to a PHY layer as resources for determining whether preemption has been performed.

In step S504, at a timing of T(r_0) - $T_3$ depicted in FIG. 16, the terminal 20 identifies each resource in the resource selection window again based on the sensing result to determine a set $S_A$ of resource candidates, and further perform preemption determination for the resource set (r_0, r_1, ...) based on the priority. For example, for r_1 illustrated in FIG. 16, SCI transmitted from another terminal 20 is detected through re-sensing, and r_1 is not included in the $S_A$. When preemption is valid, if a value prio_RX indicating the priority of SCI transmitted from the other terminal 20 is lower than a value prio_TX indicating the priority of a transport block transmitted from the terminal, the terminal 20 determines that the resource r_1 is preempted. Note that the lower a value indicating priority, the higher the priority. That is, when the value prio_RX indicating the priority of SCI transmitted from the other terminal 20 is higher than the value prio_TX indicating the priority of a transport block transmitted from the terminal 20, the terminal 20 does not exclude the resource r_1 from $S_A$. In a case where preemption is valid only for a specific priority (e.g., when sl-PreemptionEnable is any of pl1, pl2, ..., pl8), this priority is referred to as prio_pre. Then, when a value prio_RX indicating the priority of SCI transmitted from the other terminal 20 is lower than prio_pre and the prio_RX is lower than a value prio_TX indicating the priority of the transport block transmitted from the terminal, the terminal 20 determines that the resource r_1 is preempted.

In step S505, when preemption determination has been performed in step S504, the terminal 20 notifies the upper layer of the preemption determination result, performs resource reselection by the upper layer, and ends the preemption check.

When Re-evaluation is performed instead of preemption determination, after the resource candidate set $S_A$ is determined in the above step S504, if the resources of a resource set (r_0, r_1, ...) are not included in the $S_A$, the resources are not used and a resource is re-selected by the upper layer.

FIG. 17 is a diagram illustrating an example of a partial sensing operation in LTE. When partial sensing is configured by the upper layer in LTE sidelink, a terminal 20 selects a resource and performs transmission as depicted in FIG. 17. As depicted in FIG. 17, the terminal 20 performs partial sensing on part of the sensing window in the resource pool, i.e., on sensing targets. By the partial sensing, the terminal 20 receives a resource reservation field included in SCI transmitted from another terminal 20, and identifies available resource candidates in a resource selection window in the resource pool based on the field. Subsequently, the terminal 20 randomly selects a resource from the available resource candidates.

FIG. 17 is an example in which the resource pool is configured including a range from a subframe $t_0^{SL}$ to a subframe $t_{Tmax-1}^{SL}$. In the resource pool, a target area may be configured by, for example, a bitmap manner. As depicted in FIG. 17, it is assumed that a transmission trigger with respect to the terminal 20 occurs in a subframe n. As depicted in FIG. 17, Y subframes from a subframe $t_{y1}^{SL}$ to subframe $t_{yY}^{SL}$ from among subframes from a subframe n + $T_1$ to a subframe n + $T_2$ may be configured as the resource selection window.

The terminals 20 can detect that, for example, another terminal 20 is performing transmission using one or a plurality of sensing targets from a subframe $t_{y1-k\times Pstep}^{SL}$ to a subframe $t_{yY-k\times Pstep}^{SL}$ having a Y-subframe length. k may be determined using, for example, a 10-bit bitmap. FIG. 17 illustrates an example in which the third and sixth bits of the bitmap are set to "1" indicating that partial sensing is performed. That is, in FIG. 17, subframes $t_{y1-6\times Pstep}^{SL}$ to $t_{yY-6\times Pstep}^{SL}$ and subframes $t_{y1-3\times Pstep}^{SL}$ to $t_{yY-3\times Pstep}^{SL}$ are configured as sensing targets. As described above, the k-th bit of the bitmap may correspond to a sensing window from a subframe $t_{y1-k\times Pstep}^{SL}$ to a subframe $t_{yY-k\times Pstep}^{SL}$. Note that $y_i$ corresponds to an index (1, ..., Y) included in the Y subframes.

Note that it is prescribed whether k is determined using a 10-bit bitmap and $P_{step}$ may be 100 ms. However, when SL communication is performed using DL and UL carriers, $P_{step}$ may be (U/(D + S + U))×100 ms. U corresponds to the number of UL subframes, D corresponds to the number of DL subframes, and S corresponds to the number of special subframes.

If SCI is detected in the sensing targets and RSRP is higher than the threshold, the resources in the resource selection window corresponding to the resource reservation field of the SCI are excluded. In addition, when SCI is detected in the sensing targets and RSRP is less than the threshold, the resources in the resource selection window corresponding to the resource reservation field of the SCI are not excluded. The threshold may be, for example, a threshold $Th_{pTx,pRx}$ configured or defined for each resource in the sensing targets based on the transmission-side priority $p_{TX}$ and the reception-side priority $p_{RX}$.

As depicted in FIG. 17, in the resource selection window configured in the Y subframes included in an interval $[n + T_1, n + T_2]$, a terminal 20 identifies resources occupied by another UE, and resources left after the identified resources are excluded are available resource candidates. Note that the Y subframes need not be contiguous. Assuming that a set of the available resource candidates is $S_A$, when the $S_A$ is less than 20% of the resources in the resource selection window, the threshold $Th_{pTx,pRx}$ configured for each resource of the sensing targets may be increased by 3 dB and identification of resources may be performed again.

That is, the resources that are not excluded because they each have RSRP less than the threshold may be increased by increasing the threshold $Th_{pTx,pRx}$ and performing identification of resources again. Furthermore, RSSI of each resource in the $S_A$ may be measured, and the resource with the smallest RSSI may be added to a set $S_B$. The operation of adding a resource having the minimum RSSI included in the $S_A$ to the $S_B$ may be repeated until the set $S_B$ of resource candidates becomes 20% or more of the resource selection window.

The lower layer of the terminal 20 may report the $S_B$ to the upper layer. The upper layer of the terminal 20 may determine a resource to be used by performing random selection on the $S_B$. The terminal 20 may perform sidelink transmission by using the determined resource. Note that the terminal 20 may periodically use a resource a predetermined number of times (for example, $C_{resel}$ times) without performing sensing after securing the resource once.

With regard to NR Release 17 sidelink, power saving based on random resource selection and partial sensing is under study. For example, for power saving, random resource selection and partial sensing in sidelink according to LTE Release 14 may be applied to Resource allocation mode 2 in NR Release 16 sidelink. A terminal 20 to which partial sensing is applied performs reception and transmission only with a specific slot included in a sensing window.

In addition, with regard to NR Release 17 sidelink, eURLLC (enhanced Ultra Reliable Low Latency Communication) is under study with inter-UE coordination as a baseline. For example, a terminal 20A may share information indicating a resource set with a terminal 20B, and the terminal 20B may take account of the information in resource selection for transmission.

For example, as a resource allocation method in sidelink, a terminal 20 may perform full sensing as depicted in FIG. 14. A terminal 20 may perform partial sensing in which identification of a resource is performed by sensing only resources that are limited compared to full sensing, and resource selection is performed on the identified resource set. A terminal 20 may regard the resources in a resource selection window as an identified resource set without excluding a resource from the resources in the resource selection window, and may perform random selection of performing resource selection on the identified resource set.

Note that a method of performing random selection at a time of resource selection whereas using the sensing information at a time of re-evaluation or preemption determination may be regarded as partial sensing or may be regarded as random selection.

As an operation in the sensing, 1) and 2) described below may be applied.

1) Periodic-based partial sensing

An operation of determining sensing slots based on a reservation periodicity in a scheme in which sensing is performed only on some slots. Note that a reservation period is a value related to a resource reservation period field.

2) Contiguous partial sensing

An operation of determining sensing slots based on aperiodic reservation in a scheme in which sensing is performed only on some slots. Note that the aperiodic reservation is a value related to a time resource assignment field.

According to Release 17, an operation may be prescribed assuming three types of terminals 20. One is type A, and a type A terminal 20 does not have a capability of receiving any sidelink signals and channels. However, reception of a PSFCH and a S-SSB may be an exception thereof.

Another is type B, and a type B terminal 20 does not have a capability of receiving any sidelink signals and channels except for PSFCH and S-SSB reception.

The other is type D, and a type D terminal 20 has a capability of receiving all sidelink signals and channels defined in Release 16. In this regard, reception of some sidelink signals and channels is not excepted.

UE types other than the type A, the type B, and the type D described above may be expected; UE types need not be associated with UE capabilities, respectively; and UE types may be associated with UE capabilities, respectively.

According to Release 17, a plurality of resource allocation methods may be configured for a resource pool. As one power saving function, SL-DRX (Discontinuous reception) is supported. That is, a reception operation is performed only in a predetermined time interval.

FIG. 18 is a diagram illustrating an example (1) of a partial sensing operation. In a resource pool for which partial sensing is configured, a UE performs contiguous partial sensing, and on a condition that resource selection is triggered in a slot n, as depicted in FIG. 18, sensing may be performed in an interval [n + T_A, n + T_B], and resource selection may be performed in a slot n + T_B or in a slot n + T_C that is the same as or occurs after the n + T_B slot. The number of slots that are candidates for resource selection is Y slots, and FIG. 18 illustrates an example of a case where Y = 7. As depicted in FIG. 18, the beginning of Y candidate slots is a slot t_y1 and the end thereof is a slot t_yY, and the Y candidate slots are determined from the slots included in an interval [n + $T_1$, n + $T_2$]. Note that a processing time $T^{SL}_{proc,1}$ defined in Release 16 depicted in FIG. 18 corresponds to interval from a slot n in which resource selection is triggered through the beginning slot n + $T_1$ of a resource selection window. Note that [1] depicted in FIG. 18 indicates a processing time from a trigger of resource selection to the beginning timing n + T_A of sensing target slots. n used for determining an interval [n + T_A, n + T_B] may be a parameter different from n used for determining the interval [n + $T_1$, n + $T_2$]. That is, an interval [n + T_A, n + T_B] may be determined with a certain reference point n, and an interval [m + $T_1$, m + $T_2$] may be determined with another reference point m. However, in the following description, the same parameter n is used.

Details of T_B need to be considered. FIG. 19 is a diagram illustrating an example (2) of a partial sensing operation. As illustrated in FIG. 19, when T_B is small, the number of sensing targets decreases, and there is a possibility that sufficient performance related to resource exclusion cannot be acquired. It is also necessary to consider a relationship between T_B and T_C. It is necessary to consider a UE processing time from sensing to resource selection indicated by [2] in FIG. 19.

It is also necessary to consider a relationship between T_C and t_y1. FIG. 20 is a diagram illustrating an example (3) of a partial sensing operation. A UE processing time from resource selection to transmission, indicated by [3] in FIG. 20, needs to be considered. On the other hand, in a case where $T_1$ is defined as in Release 16 and t_y1 is close to n + $T_1$, T_B approaches 0 when the UE processing time [3] should be secured, thus the number of sensing targets becomes too small, and there is a possibility that performances related to resource exclusion may be deteriorated.

Therefore, when a terminal 20 performs sensing (that is, contiguous partial sensing) in the interval [n + T_A, n + T_B] in response to the resource selection trigger generated in the slot n, at least one value of A) to D) depicted below may be determined based on a predetermined condition.

A) the end timing n + T_B of the sensing targets (i.e., T_B)
B) a timing of performing resource selection n + T_C (i.e., T_C)
C) the beginning timing of the resource selection window n + $T_1$ (i.e. $T_1$)
D) the beginning timing t_y1 of the Y candidate slots with respect to partial sensing

FIG. 21 is a diagram illustrating an example (1) of a partial sensing operation according to the embodiment of the present invention. T_B or n + T_B in the above A) may be a predetermined value or may be a predetermined value or more. The parameter X_B depicted in FIG. 21 that is configured or defined may be the predetermined value. As depicted in FIG. 21, X_B corresponds to a length from a slot n of a trigger to a slot n + T_B; and (n + T_B) - n = X_B or (n + T_B) - n >= X_B may hold.

A value based on the beginning timing t_y1 of Y candidate slots with respect to partial sensing may be the predetermined value. For example:

$$n + T_B = t_y1 - (T^{SL}_{proc,0} + T^{SL}_{proc,1})$$

may hold, or

$$n + T_B >= t_y1 - (T^{SL}_{proc,0} + T^{SL}_{proc,1})$$

may hold. The definitions or values of the parameters $T^{SL}_{proc,0}$ and $T^{SL}_{proc,1}$ may be similar to or different from those of Release 16. For example, the parameter $T^{SL}_{proc,0}$ may be a UE processing time from sensing to resource selection. The parameter $T^{SL}_{proc,1}$ may be a UE processing time from resource selection to transmission. The value of $T^{SL}_{proc,0}$ in Release 16 may be 1 slot when SCS is 15 kHz or 30 kHz, 2 slots when SCS is 60 kHz, and 4 slots when SCS is 120 kHz. The value of $T^{SL}_{proc,1}$ in Release 16 may be 3 slots when SCS is 15 kHz, 5 slots when SCS is 30 kHz, 9 slots when SCS is 60 kHz, and 17 slots when SCS is 120 kHz. Also hereinafter, the definitions or values of the parameters $T^{SL}_{proc,0}$ and $T^{SL}_{proc,1}$ are the same as those described above.

Further, a value based on the timing T_C at which resource selection is performed may be the predetermined value. For example:

$$T_B = T_C - T^{SL}_{proc,0}$$

may hold, or

$$T_B >= T_C - T^{SL}_{proc,0}$$

may hold. The definition or value of the parameter $T^{SL}_{proc,0}$ may be the same as or different from that of Release 16.

A value based on the beginning timing n + $T_1$ of a resource selection window may be the predetermined value. For example:

$$T_B = T_1 - (T^{SL}_{proc,0} + T^{SL}_{proc,1})$$

may hold, or

$$T_B >= T_1 - (T^{SL}_{proc,0} + T^{SL}_{proc,1})$$

may hold. The definitions or values of the parameters $T^{SL}_{proc,0}$ and $T^{SL}_{proc,1}$ may be the same as or different from those of Release 16.

A value based on the end timing t_yY of Y candidate slots with respect to partial sensing may be the predetermined value. For example:

$$n + T_B = t_yY - 31$$

may hold, or

$$n + T_B >= t_yY - 31$$

may hold.

A value based on a range that can be designated by a time resource allocation field may be the predetermined value. For example, the predetermined value, that is, T_B may be any one of 0 to 31 slots or any one of 0 to 32 slots.

FIG. 22 is a diagram illustrating an example (2) of a partial sensing operation according to the embodiment of the present invention. T_C or n + T_C in the above B) may be a predetermined value, or may be a predetermined value or more, or may be a predetermined value or less. The parameter X_C that is configured or defined may be the predetermined value.

A value based on the beginning timing t_y1 of Y candidate slots with respect to partial sensing may be the predetermined value. For example, as depicted in FIG. 22:

$$n + T_C = t_y1 - T^{SL}_{proc,1}$$

may hold, or

$$n + T_C >= t_y1 - T^{SL}_{proc,1}$$

may hold. The definition or value of the parameter $T^{SL}_{proc,1}$ may be the same as or different from that of Release 16.

A value based on the end timing n + T_B of sensing targets may be the predetermined value. FIG. 23 is a diagram illustrating an example (3) of a partial sensing operation according to the embodiment of the present invention. As depicted in FIG. 23, for example:

$$T_C = T_B + T^{SL}_{proc,0}$$

may hold, or

$$T_C <= T_B + T^{SL}_{proc,0}$$

may hold. The definition or value of the parameter $T^{SL}_{proc,0}$ may be the same as or different from that of Release 16.

A value based on the beginning timing n + $T_1$ of a resource selection window may be the predetermined value. For example:

$$T_C = T_1 - T^{SL}_{proc,1}$$

may hold, or

$$T_C >= T_1 - T^{SL}_{proc,1}$$

may hold. The definition or value of the parameter $T^{SL}_{proc,1}$ may be the same as or different from that of Release 16.

A value based on the end timing t_yY of Y candidate slots with respect to partial sensing may be the predetermined value. For example:

$$n + T_C = t_yY - 31 + T^{SL}_{proc,0}$$

may hold, or

$$n + T_C >= t_yY - 31 + T^{SL}_{proc,0}$$

may hold. The definition or value of the parameter $T^{SL}_{proc,0}$ may be the same as or different from that of Release 16.

A value based on a range that can be designated by a time resource allocation field may be the predetermined value. For example, the predetermined value, that is, T_C may be any one of 0 to 31 slots or any one of 0 to 32 slots.

$T_1$ or n + $T_1$ of C) described above may be a predetermined value, or may be a predetermined value or more, or may be a predetermined value or less. The parameter X_1 that is configured or defined may be the predetermined value. X_1 may be the parameter $T^{SL}_{proc,1}$, and the definition or value of the parameter $T^{SL}_{proc,1}$ may be the same as or different from that of Release 16. Also, a value greater than $T^{SL}_{proc,1}$ may be defined as X_1.

A value based on the end timing n + T_B of sensing targets may be the predetermined value. For example:

$$T_1 = T_B + (T^{SL}_{proc,0} + T^{SL}_{proc,1})$$

may hold, or

$$T_1 <= T_B + (T^{SL}_{proc,0} + T^{SL}_{proc,1})$$

may hold. The definitions or values of the parameters $T^{SL}_{proc,0}$ and $T^{SL}_{proc,1}$ may be the same as or different from those of Release 16.

Further, a value based on a timing T_C at which resource selection is performed may be the predetermined value. For example:

$$T_1 = T_C + T^{SL}_{proc,1}$$

may hold, or

$$T_1 >= T_C + T^{SL}_{proc,1}$$

may hold. The definition or value of the parameter $T^{SL}_{proc,1}$ may be the same as or different from that of Release 16.

t_y1 or t_y1 - Z in D) above may be a predetermined value or may be less than or equal to a predetermined value. However, Z may be any one of n, n + T_A, n + T_B, n + T_C, or n + $T_1$.

A value based on the end timing n + T_B of sensing targets may be the predetermined value. For example:

$$t_y1 = n + T_B + (T^{SL}_{proc,0} + T^{SL}_{proc,1})$$

may hold, or

$$t_y1 <= n + T_B + (T^{SL}_{proc,0} + T^{SL}_{proc,1})$$

may hold. The definitions or values of the parameters $T^{SL}_{proc,0}$ and $T^{SL}_{proc,1}$ may be the same as or different from those of Release 16.

Further, a value based on a timing T_C at which resource selection is performed may be the predetermined value. For example:

$$t_y1 = n + T_C + T^{SL}_{proc,1}$$

may hold, or

$$t_y1 >= n + T_C + T^{SL}_{proc,1}$$

may hold. The definition or value of the parameter $T^{SL}_{proc,1}$ may be the same as or different from that of Release 16.

The parameter X_y1 that is configured or defined may be the predetermined value. X_y1 may be $T^{SL}_{proc,1}$ and the definition or value of $T^{SL}_{proc,1}$ may be the same as or different from that of Release 16. For example, a value greater than $T^{SL}_{proc,1}$ may be configured or defined as X_y1.

A terminal 20 may apply the above A) to D) in combination. For example:

C) $T_1$ >= X1 or D) t_y1 - n >= X_y1, and
B) n + T_C >= t_y1 - $T^{SL}_{proc,1}$, and
A) T_B >= T_C - $T^{SL}_{proc,0}$ may hold.

FIG. 24 is a diagram illustrating an example (4) of a partial sensing operation according to the embodiment of the present invention. FIG. 24 depicts a case where:

D) t_y1 - n = X_y1, and
B) n + T_C = t_y1 - $T^{SL}_{proc,1}$, and
A) T_B = T_C - $T^{SL}_{proc,0}$ hold.

In the above embodiment, T_A may be a positive value, may be 0, or may be a negative value.

In the above embodiment, T_C is a timing at which resource selection is performed.

In the above-described embodiment, "equal to or greater than" may be replaced with "greater than", and "equal to or less than" may be replaced with "less than". For example, ">=" may be replaced with ">", "[" may be replaced with "(", "<=" may be replaced with "<", and "]" may be replaced with ")".

The above-described embodiment may be applied to an operation in which a certain terminal 20 configures or allocates a transmission resource of another terminal 20.

The above-described embodiment is not limited to a V2X terminal and may be applied to a terminal that performs D2D communication.

The operations of the above-described embodiment may be performed only with respect to a certain resource pool. For example, the operations of the above-described embodiment may be performed only with respect to a resource pool usable by a terminal 20 of Release 17 or later.

Any ones of the various parameters may be configured or defined (in advance) for each predetermined condition. The various parameters may be any ones of X_B, X_C, X_1, X_y1, $T^{SL}_{proc,0}$, and $T^{SL}_{proc,1}$. The predetermined condition may be any one of PDB (Packet Delay Budget), priority, periodicity associated with transmission data (for example, zero or not), CR (Channel occupancy Ratio), or CBR (Channel Busy Ratio).

The operations according to the above-described embodiment may be applied based on either a physical slot or a logical slot. Logical slots refer to only slots included in a resource pool, and need not be contiguous with respect to physical slots or may be contiguous with respect to physical slots.

According to the above embodiment, a terminal 20 may perform resource exclusion sufficiently, thereby improving reliability and achieving a power saving effect. In addition, it is possible to secure a UE processing time required for the terminal 20.

That is, in terminal-to-terminal direct communication, it is possible to improve the reliability related to sensing at a time of autonomous resource selection.

(Apparatus Configuration)

Next, functional configuration examples of the base station 10 and the terminal 20 that execute the processes and operations described above will be described. The base station 10 and the terminal 20 include functions for implementing the above-described embodiment. However, each of the base station 10 and the terminal 20 may have only some of the functions of the embodiment.

<Base Station 10>

FIG. 25 is a diagram illustrating an example of a functional configuration of the base station 10. As illustrated in FIG. 25, the base station 10 includes a transmission unit 110, a reception unit 120, a configuration unit 130, and a control unit 140. The functional configuration depicted in FIG. 25 is merely an example. As long as the operations according to the embodiment of the present invention can be executed, the function classifications and the names of the functional units may be freely determined.

The transmission unit 110 has a function of generating a signal to be transmitted to the terminal 20 side and wirelessly transmitting the signal. The reception unit 120 includes a function of receiving various signals transmitted from the terminal 20 and acquiring, for example, information of an upper layer from a received signal. Further, the transmission unit 110 has a function of transmitting an NR-PSS, an NR-SSS, an NR-PBCH, DL/UL control signals, a DL reference signal, and the like to the terminal 20.

The configuration unit 130 stores configuration information configured in advance and various kinds of configuration information to be transmitted to the terminal 20 in a storage device, and reads configuration information from the storage device as necessary. The contents of configuration information is, for example, information related to configuring D2D communication.

As described with regard to the embodiment, the control unit 140 performs a process related to configuration for the terminal 20 to perform D2D communication. In addition, the control unit 140 transmits scheduling of D2D communication and DL communication to the terminal 20 via the transmission unit 110. In addition, the control unit 140 receives information related to a HARQ response of D2D communication and DL communication from the terminal 20 via the reception unit 120. A functional unit related to signal transmission in the control unit 140 may be included in the transmission unit 110, and a functional unit related to signal reception in the control unit 140 may be included in the reception unit 120.

<Terminal 20>

FIG. 26 is a diagram illustrating an example of a functional configuration of the terminal 20. As illustrated in FIG. 26, the terminal 20 includes a transmission unit 210, a reception unit 220, a configuration unit 230, and a control unit 240. The functional configuration illustrated in FIG. 26 is merely an example. As long as the operations according to the embodiment of the present invention can be executed, the function classification and the names of the functional units may be freely determined.

The transmission unit 210 generates a transmission signal from transmission data and wirelessly transmits the transmission signal. The reception unit 220 wirelessly receives various signals and acquires a signal of an upper layer from a received signal of a physical layer. In addition, the reception unit 220 has a function of receiving NR-PSS, NR-SSS, NR-PBCH, DL/UL/SL control signals, a reference signal, or the like transmitted from the base station 10. In addition, for example, the transmission unit 210 transmits a physical sidelink control channel (PSCCH), a physical sidelink shared channel (PSSCH), a physical sidelink discovery channel (PSDCH), a physical sidelink broadcast channel (PSBCH), or the like to another terminal 20 as D2D communication, and the reception unit 220 receives PSCCH, PSSCH, PSDCH, PSBCH, or the like from another terminal 20.

The configuration unit 230 stores various types of configuration information received from the base station 10 or a terminal 20 by the reception unit 220 in a storage device, and reads configuration information from the storage device as necessary. The configuration unit 230 also stores configuration information that is configured in advance. The contents of the configuration information are, for example, information related to configuration of D2D communication.

As described with regard to the embodiment, the control unit 240 controls D2D communication for establishing an RRC connection with another terminal 20. The control unit 240 unit performs processing related to a power saving operation. In addition, the control unit 240 performs processing related to HARQ of D2D communication and DL communication. In addition, the control unit 240 transmits, to the base station 10, information related to a HARQ response of D2D communication and DL communication to another terminal 20 determined through scheduling by the base station 10. Further, the control unit 240 may perform scheduling of D2D communication for another terminal 20. In addition, the control unit 240 may autonomously select a resource to be used for D2D communication from a resource selection window on the basis of a result of sensing, or may perform re-evaluation or preemption. In addition, the control unit 240 performs processing related to power saving in transmission and reception of D2D communication. Further, the control unit 240 performs processing related to terminal-to-terminal coordination in D2D communication. A functional unit related to signal transmission in the control unit 240 may be included in the transmission unit 210, and a functional unit related to signal reception in the control unit 240 may be included in the reception unit 220.

(Hardware Configuration)

The block diagrams (FIGS. 25 and 26) used in the descriptions of the above-described embodiment depict the blocks on a per-function basis. Each of these functional blocks (components) is realized by any combination of at least one of hardware and software. A specific method of realizing the functional blocks is not particularly limited. That is, each functional block may be realized by using one physically or logically coupled device, or may be realized by directly or indirectly (for example, using a wire, wireless, or the like) coupling two or more physically or logically separated devices. Each functional block may be realized by combining software with one device or a plurality of devices.

The functions include, but are not limited to, determining, judging, calculating, computing, processing, deriving, investigating, searching, ascertaining, receiving, transmitting, outputting, accessing, resolving, selecting, choosing, establishing, comparing, assuming, expecting, deeming, broadcasting, notifying, communicating, forwarding, configuring, reconfiguring, allocating, mapping, assigning, and the like. For example, a functional block (component) configured to perform transmission is referred to as a transmission unit or a transmitter. In any case, as described above, the functional unit realizing method is not particularly limited.

For example, each of the base station 10, the terminal 20, and the like according to the embodiment of the present disclosure may function as a computer that performs processing of the wireless communication method according to the present disclosure. FIG. 27 is a diagram illustrating an example of a hardware configuration of the base station 10 and the terminal 20 according to the embodiment of the present disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

In the following description, a term "apparatus" can be read as a circuit, a device, a unit, or the like. Hardware configurations of the base station 10 and the terminal 20 may be each configured to include one or more of the devices depicted in the drawing, or may be configured not to include some of the devices depicted in the drawing.

The functions in the base station 10 and the terminal 20 are realized by causing hardware such as the processor 1001 and the storage device 1002 to read predetermined software (program), causing the processor 1001 to perform arithmetic operations to control communication by the communication device 1004 or to control at least one of reading or writing of data in the storage device 1002 and the auxiliary storage device 1003.

The processor 1001 operates, for example, an operating system to control the entire computer. The processor 1001 may be configured by a central processing unit (CPU) including an interface with a peripheral device, a control device, an arithmetic device, a register, and the like. For example, each of the above-described control unit 140, control unit 240, and the like may be realized by the processor 1001.

The processor 1001 reads out a program (program code), a software module, data, or the like from at least one of the auxiliary storage device 1003 or the communication device 1004 to the storage device 1002, and executes various processes in accordance with the program, the software module, the data, or the like. As the program, a program that causes a computer to execute at least some of the operations described with regard to the above-described embodiment is used. For example, the control unit 140 of the base station 10 illustrated in FIG. 25 may be implemented by a control program stored in the storage device 1002 and executed by the processor 1001. In addition, for example, the control unit 240 of the terminal 20 illustrated in FIG. 26 may be implemented by a control program stored in the storage device 1002 and executed by the processor 1001. Although it has been described that the above-described various processes are executed by one processor 1001, the processes may be executed by two or more processors 1001 simultaneously or sequentially. The processor 1001 may be implemented by one or more chips. The program may be transmitted from a network via an electric communication line.

The storage device 1002 is a computer-readable recording medium, and may include at least one of a read-only memory (ROM), an erasable programmable ROM (EPROM), an electrically erasable programmable ROM (EEPROM), a random access memory (RAM), or the like. The storage device 1002 may be referred to as a register, a cache, a main memory (main storage device), or the like. The storage device 1002 can store programs (program codes), software modules, and the like that are executable to implement the communication methods according to the embodiment of the present disclosure.

The auxiliary storage device 1003 is a computer-readable recording medium, and may include at least one of an optical disk such as a compact disc ROM (CD-ROM), a hard disk drive, a flexible disk, a magnetooptical disk (for example, a compact disk, a digital versatile disk, or a Blu-ray (registered trademark) disk), a smart card, a flash memory (for example, a card, a stick, or a key drive), a floppy (registered trademark) disk, a magnetic strip, or the like. The aforementioned storage medium may be, for example, a database including at least one of the storage device 1002 or the auxiliary storage device 1003, a server, or any other appropriate medium.

The communication device 1004 is hardware (transmission/reception device) for performing communication between computers via at least one of a wired network or a wireless network, and is also referred to as a network device, a network controller, a network card, a communication module, or the like, for example. The communication device 1004 may be configured to include a high-frequency switch, a duplexer, a filter, a frequency synthesizer, and/or the like in order to realize, for example, at least one of frequency division duplex (FDD) or time division duplex (TDD). For example, a transmitting/receiving antenna, an amplifying unit, a transmission/reception unit, a transmission path interface, and/or the like may be realized by the communication device 1004. The transmission/reception unit may be implemented in such a way that a transmission unit and a reception unit are physically or logically separated from each other.

The input device 1005 is an input device (for example, a keyboard, a mouse, a microphone, a switch, a button, a sensor, or the like) that receives input from the outside. The output device 1006 is an output device (for example, a display, a speaker, an LED lamp, or the like) that performs output to the outside. The input device 1005 and the output device 1006 may be integrated with each other (for example, as a touch panel).

These devices such as the processor 1001 and the storage device 1002 are connected by a bus 1007 for communicating information. The bus 1007 may be configured using a single bus, or may be configured using a different bus for each device.

Each of the base station 10 and the terminal 20 may be configured to include hardware such as a microprocessor, a digital signal processor (DSP), an application specific integrated circuit (ASIC), a programmable logic device (PLD), a field programmable gate array (FPGA), and/or the like; and some or all of the functional blocks may be realized by the hardware. For example, the processor 1001 may be implemented using at least one of these pieces of hardware.

(Summary of Embodiment)

As described above, according to the embodiment of the present invention, there is provided a terminal including a reception unit configured to perform partial sensing in a resource pool, a control unit configured to select one or more slots that are candidates for resource selection from a resource selection window in the resource pool, and a transmission unit configured to select a resource that is used for transmission from the one or more slots that are the candidates based on a result of the partial sensing. The control unit controls an end timing of slots that are targets of the partial sensing, a timing at which the transmission unit selects the resource, and a beginning timing of the one or more slots that are the candidates.

According to the above configuration, the terminal 20 can sufficiently perform resource exclusion, and can realize improvement in reliability and power saving effect. In addition, it is possible to secure a UE processing time required for the terminal 20. That is, in terminal-to-terminal direct communication, it is possible to improve reliability related to sensing at a time of autonomous resource selection.

The control unit may determine the end timing of the slots that are the targets of the partial sensing based on the beginning timing of the one or more slots that are the candidates. With this configuration, the terminal 20 can perform resource exclusion sufficiently, and can realize improvement in reliability and power saving effect.

The control unit may determine the end timing of the slots that are the targets of the partial sensing based on the timing at which the transmission unit selects the resource. With this configuration, the terminal 20 can perform resource exclusion sufficiently, and can realize improvement in reliability and power saving effect.

The control unit may determine the timing at which the transmission unit selects the resource based on the beginning timing of the one or more slots that are the candidates. With this configuration, the terminal 20 can perform resource exclusion sufficiently, and can realize improvement in reliability and power saving effect.

The control unit may determine the beginning timing of the one or more slots that are the candidates based on the end timing of the slots that are the targets of the partial sensing. With this configuration, the terminal 20 can perform resource exclusion sufficiently, and can realize improvement in reliability and power saving effect.

Further, according to the embodiment of the present invention, there is provided a communication method in which a terminal executes a reception procedure of executing partial sensing in a resource pool; a control procedure of selecting one or more slots that are candidates for resource selection from a resource selection window in the resource pool; a transmission procedure of selecting a resource that is used for transmission from the one or more slots that are the candidates based on a result of the partial sensing; and a procedure of controlling an end timing of the slots that are the targets of the partial sensing, a timing of selecting the resource, and a beginning timing of the one or the plurality of slots that are the candidates.

According to the above configuration, the terminal 20 can sufficiently perform resource exclusion, and can realize improvement in reliability and power saving effect. In addition, it is possible to secure a UE processing time required for the terminal 20. That is, in terminal-to-terminal direct communication, it is possible to improve reliability related to sensing at a time of autonomous resource selection.

(Supplementary Explanation of Embodiment)

Although the embodiment of the present invention have been described above, the disclosed invention is not limited to such an embodiment, and those skilled in the art will understand various variations, modifications, alterations, substitutions, and the like. Although the present invention has been described using specific numerical examples in order to facilitate understanding of the present invention, these numerical values are merely examples, and any appropriate values may be used unless otherwise specified. The separation of items in the above description is not essential to the present invention; and a point described in two or more items may be used in combination as necessary, and a point described in one item may be applied to a point described in another item (as long as there is no contradiction). The boundaries of functional units or processing units in the functional block diagrams do not necessarily correspond to the boundaries of physical components. The operations of a plurality of functional units may be physically performed by one component, or the operation of one functional unit may be physically performed by a plurality of components. With regard to processing procedures described in the embodiment, the order of processing may be changed as long as there is no contradiction. For convenience of description of processing, the base station 10 and the terminal 20 have been described using functional block diagrams, but such an apparatus may be implemented by hardware, software, or a combination thereof. Each of software executed by a processor included in the base station 10 according to the embodiment of the present invention and software executed by a processor included in the terminal 20 according to the embodiment of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, a server, or the like.

Notification of information is not limited to that in the embodiment described in the present disclosure, and may be performed using another method. For example, notification of information may be performed using physical layer signaling (for example, downlink control information (DCI) or uplink control information (UCI)), upper layer signaling (for example, radio resource control (RRC) signaling), MAC (Medium Access Control) signaling, broadcast information (MIB (Master Information Block), or SIB (System Information Block)), another signal, or a combination thereof. In addition, the RRC signaling may be referred to as an RRC message, and may be, for example, an RRC connection setup message, an RRC connection reconfiguration message, or the like.

The embodiment described in the present disclosure may be applied to at least one of systems using Long Term Evolution (LTE), LTE-Advanced (LTE-A), SUPER 3G, IMT-Advanced, 4G ($4^{th}$ generation mobile communication system), 5G ($5^{th}$ generation mobile communication system), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and next-generation systems extended based thereon. In addition, the embodiment described in the present disclosure may be applied to a plurality of systems that are combined (for example, a combination of at least one of LTE or LTE-A with 5G).

The order of the processing procedures of sequences, flowcharts, and the like of each embodiment described in the present specification may be changed as long as there is no contradiction. For example, the methods described in the present disclosure use exemplified orders to present the elements of the various steps and are not limited to use the specific orders presented.

In the present specification, a specific operation described as being performed by the base station 10 may be performed by an upper node of the base station 10 in some cases. In a network including one or more network nodes including the base station 10, it is apparent that various operations performed for communication with the terminal 20 may be performed by at least one of the base station 10 or another network node (for example, but not limited to, an MME, an S-GW, or the like) other than the base station 10. Although the case where there is one network node other than the base station 10 has been exemplified above, this other network node may be a combination of a plurality of other network nodes (for example, an MME and an S-GW).

Information, a signal or the like described in the present disclosure may be output from an upper layer (or a lower layer) to a lower layer (or an upper layer). The signal or the like may be input or output via a plurality of network nodes.

The thus input/output information or the like may be stored in a specific location (for example, a memory) or may be managed using a management table. The input/output information or the like may be overwritten, updated, or appended. The output information or the like may be deleted. The input information or the like may be transmitted to another device.

Determination in the present disclosure may be implemented using a value (0 or 1) represented by one bit, may be performed using a Boolean value (true or false), or may be performed using comparison of numerical values (for example, comparison with a predetermined value) .

Software should be interpreted broadly to mean an instruction, an instruction set, a code, a code segment, a program code, a program, a subprogram, a software module, an application, a software application, a software package, a routine, a subroutine, an object, an executable file, an executable thread, a procedure, a function, or the like, whether it is referred to as software, firmware, middleware, microcode, hardware description language, or another name.

Software, an instruction, information, or the like may be transmitted or received through a transmission medium. For example, if software is transmitted from a website, server, or another remote source using at least one of a wired technology (coaxial cable, optical fiber cable, twisted pair, digital subscriber line (DSL), etc.) or a wireless technology (infrared, microwave, etc.), th at least one of the wired technology and wireless technology is included in the definition of the transmission medium.

The information, signals, and the like described in the present disclosure may be expressed using any of a variety of different technologies. For example, data, an instruction, a command, information, a signal, a bit, a symbol, a chip, and the like that may be cited throughout the above description may be expressed by a voltage, a current, an electromagnetic wave, a magnetic field or a magnetic particle, an optical field or a photon, or any combination thereof.

It should be noted that the terms described in the present disclosure and the terms necessary for understanding the present disclosure may be replaced with terms having the same or similar meanings. For example, at least one of a channel or a symbol may be a signal (signaling). The signal may be a message. A component carrier (CC) may be referred to as a carrier frequency, a cell, a frequency carrier, or the like.

The terms "system" and "network" used in the present disclosure are used interchangeably.

In addition, the information, the parameters, and the like described in the present disclosure may be represented by using absolute values, may be represented by using relative values with respect to predetermined values, or may be represented by using other corresponding information. For example, a radio resource may be represented by an index.

The names used for the above-mentioned parameters are in no way restrictive. Furthermore, equations and the like that use these parameters may differ from those explicitly disclosed in the present disclosure. The various channels (e.g., PUCCH, PDCCH, etc.) and information elements may be identified by any suitable names, and thus the various names assigned to these various channels and information elements are in no way restrictive.

In the present disclosure, terms such as "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier" and the like may be used interchangeably. The base station may also be referred to by a term such as a macro cell, a small cell, a femto cell, a pico cell, etc.

The base station can cover one or more (e.g., three) cells. When the base station covers multiple cells, the entire coverage area of the base station may be divided into multiple smaller areas, and each smaller area may also provide a communication service by a base station subsystem (for example, an indoor small base station (remote radio head (RRH)). The term "cell" or "sector" refers to part or all of the coverage area of at least one of the base station and the base station subsystem that provides the communication service in this coverage.

In the present disclosure, the terms "mobile station (MS)," "user terminal," "user equipment (UE)," "terminal," and the like may be used interchangeably.

A mobile station may also be referred to, by those skilled in the art, by a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or any one of some other suitable terms.

At least one of the base station or the mobile station may be referred to by a transmission device, a reception device, a communication device, or the like. Note that at least one of the base station or the mobile station may be a device mounted on a mobile body, may be a mobile body itself, or the like. The mobile body may be a vehicle (for example, a car, an airplane, or the like), a mobile body that moves without an operator (for example, a drone, an automatic driving vehicle, or the like), or a robot (manned or unmanned). At least one of the base station or the mobile station may be a device that does not necessarily move during a communication operation. For example, at least one of the base station or the mobile station may be an Internet of Things (IoT) device such as a sensor.

Also, the base station in the present disclosure may be read as a user terminal. For example, each embodiment of the present disclosure may be applied to a configuration in which communication between the base station and the user terminal is replaced with communication between a plurality of terminals 20 (which may be referred to as D2D (Device-to-Device), V2X (Vehicle-to-Everything), or the like, for example). In this case, the terminal 20 may have the functions of the base station 10 described above. In addition, terms such as "up" and "down" may be replaced with terms (for example, "side") corresponding to terminal-to-terminal communication. For example, an uplink channel, a downlink channel, and the like may be read as side channels.

Similarly, the user terminal in the present disclosure may be read as a base station. In this case, the base station may be configured to have the functions of the above-described user terminal.

The term "determining" used in the present disclosure may mean any one of a wide variety of actions. "Determining" may mean considering that, for example, it has been "determined" to have perform judging, calculating, computing, processing, deriving, investigating, looking up, searching, or inquiring (e.g., searching a table, a database, or another data structure), ascertaining, or the like. Also, "determining" may mean considering that it has been "determined" to have perform, for example, receiving (e.g., receiving information), transmitting (e.g., transmitting information), inputting, outputting, accessing (e.g., accessing data in a memory), or the like. In addition, "determining" may mean considering that it has been determined to have perform resolving, selecting, choosing, establishing, comparing, or the like. That is, "determining" may mean considering that it has been "determined" to have perform a certain operation. In addition, "determining" may be replaced with "assuming", "expecting", "considering", or the like.

The term "connected," "coupled," or any variation thereof, refers to any connection or coupling, either direct or indirect, between two or more elements, and may mean presence of one or more intermediate elements between two elements that are "connected" or "coupled" to each other. The coupling or connection between the elements may be physical, logical, or a combination thereof. For example, "connection" may be read as "access". As used in the present disclosure, the two elements may be considered as being "connected" or "coupled" to each other using one or more wires, cables, or printed electrical connections, or any combinations thereof, as well as using any one of some non-restrictive and non-inclusive examples, such as electromagnetic energy having a wavelength in a radio frequency range, a microwave range, or an optical (visible or invisible) range.

The reference signal may be abbreviated to RS (reference signal), and may be referred to as a pilot depending on an applied standard.

As used in the present disclosure, words "based on" do not mean "based only on" unless expressly specified otherwise. In other words, the words "based on" have both of a meaning of "based only on" and a meaning of "based at least on".

Any reference to elements using designations such as "first," "second," and the like as used in the present disclosure does not generally limit the quantities or order of these elements. These designations may be used in the present disclosure as a convenient method of distinguishing between two or more elements. Thus, a reference to first and second elements does not mean that only two elements may be used and does not mean that the first element must precede the second element in some manner.

"Means" as any element of each apparatus described above may be replaced with "unit", "circuit", "device", or the like.

Where "include", "including" or any variation thereof is used in the present disclosure, these terms are intended to be inclusive in a manner similar to the term "comprising." Furthermore, the term "or" as used in the present disclosure is intended not to be "exclusive or".

A radio frame may include one or more frames with respect to a time domain. With respect to the time domain, any one of the one or more frames may be referred to as a subframe. The subframe may include one or more slots with respect to the time domain. The subframe may have a fixed length of time (e.g., 1 ms) that is not dependent on numerology.

The numerology may be a communication parameter applied to at least one of transmission or reception of a certain signal or channel. The numerology may represent, for example, at least one of a subcarrier spacing (SCS), a bandwidth, a symbol length, a cyclic prefix length, a transmission time interval (TTI), the number of symbols per TTI, a radio frame configuration, a specific filtering process performed by a transmitter-receiver with respect to a frequency domain, a specific windowing process performed by a transmitter-receiver with respect to a time domain, or the like.

A slot may include one or more symbols (OFDM (Orthogonal Frequency Division Multiplexing) symbols, SC-FDMA (Single Carrier Frequency Division Multiple Access) symbols, or the like). A slot may be a time unit based on numerology.

Ae slot may include a plurality of mini-slots. Each minislot may include one or more symbols with respect to a time domain. A minislot may also be referred to as a subslot. A minislot may include a smaller number of symbols than those of a slot. A PDSCH (or PUSCH) transmitted in a time unit greater than a minislot may be referred to as a PDSCH (or PUSCH) mapping type A. A PDSCH (or PUSCH) transmitted using a minislot may be referred to as a PDSCH (or PUSCH) mapping type B.

Each of a radio frame, a subframe, a slot, a minislot, and a symbol represents a time unit for transmitting a signal. A radio frame, a subframe, a slot, a minislot, and a symbol may be referred to by respective different names.

For example, one subframe may be referred to as a transmission time interval (TTI); a plurality of contiguous subframes may be referred to as a TTI; or one slot or one minislot may be referred to as a TTI. That is, at least one of a subframe or a TTI may be a subframe (1 ms) in the existing LTE, may have a length shorter than 1 ms (for example, 1 to 13 symbols), or may have a length longer than 1 ms. Note that units expressing a TTI may be referred to as slots, minislots, or the like instead of subframes.

A TTI refers to, for example, a shortest time unit of scheduling in wireless communication. For example, in a LTE system, the base station performs scheduling for allocating radio resources (a frequency bandwidth, transmission power, and the like that can be used in each terminal 20) to each terminal 20 on a per TTI basis. Note that the definition of TTI is not limited to this.

TTIs may be used as transmission time units of transmitting a channel-coded data packet (transport block), a code block, a code word, or the like, or may be used as processing units for scheduling, link adaptation, or the like. When a TTI is given, a time interval (for example, the number of symbols) to which a transport block, a code block, a code word, or the like is actually mapped may be shorter than the TTI.

When one slot or one minislot is referred to as a TTI, one or more TTIs (i.e., one or more slots or one or more minislots) may be used as the shortest time unit of scheduling. In addition, the number of slots (the number of minislots) used as the shortest time unit of scheduling may be controlled.

A TTI having a time length of 1 ms may be referred to as a regular TTI (a TTI according to LTE Rel. 8-12), a normal TTI, a long TTI, a regular subframe, a normal subframe, a long subframe, a slot, or the like. A TTI that is shorter than a regular TTI may be referred to as a shortened TTI, a short TTI, a partial or fractional TTI, a shortened subframe, a short subframe, a minislot, a subslot, a slot, or the like.

Note that a long TTI (for example, a regular TTI, a subframe, or the like) may be replaced with a TTI having a time length exceeding 1 ms, and a short TTI (for example, a shortened TTI or the like) may be replaced with a TTI having a TTI length less than the TTI length of a long TTI and equal to or greater than 1 ms.

A resource block (RB) is a resource allocation unit with respect to a time domain and a frequency domain, and may include one or more contiguous subcarriers with respect to the frequency domain. The number of subcarriers included in a RB may be the same regardless of the numerology, for example, 12. The number of subcarriers included in a RB may be determined based on the numerology.

In addition, the time domain of a RB may include one or more symbols, and may have a length of 1 slot, 1 mini-slot, 1 subframe, or 1 TTI. 1 TTI, 1 subframe or the like may include one or more resource blocks.

Note that the one or more RBs may be referred to as a physical resource block (PRB or Physical RB), a subcarrier group (SCG), a resource element group (REG), a PRB pair, a RB pair, or the like.

A resource block may include one or more resource elements (REs). For example, a 1 RE may have a radio resource area of one subcarrier and one symbol.

A bandwidth part (BWP) (which may also be referred to as a partial bandwidth, etc.) may refer to a subset of contiguous common resource blocks (RBs) for a certain numerology with respect to a certain carrier. The common RBs may be identified by indexes of the RBs with respect to a common reference point of the carrier. PRBs may be defined with respect to a certain BWP and may be numbered in the BWP.

A BWP may be a BWP for UL (UL BWP) and may be a BWP for DL (DL BWP). For the terminal 20, one or more BWPs may be configured in one carrier.

At least one of the configured BWPs may be active and the terminal 20 need not be expected to transmit or receive a certain signal/channel outside the active BWP. Each of "cell", "carrier", and the like in the present disclosure may be replaced with "BWP".

The above-described structures of a radio frame, a subframe, a slot, a minislot, and a symbol are merely examples. For example, configurations such as the number of subframes included in a radio frame, the number of slots per subframe or radio frame, the number of minislots included in a slot, the number of symbols and RBs included in a slot or minislot, the number of subcarriers included in an RB, the number of symbols in a TTI, a symbol length, a cyclic prefix (CP) length, and the like can be changed variously.

In the present disclosure, for example, when articles are added by translation, such as a, an, and the in English, the present disclosure should be interpreted as nouns following these articles may be plurals.

In the present disclosure, the term "A and B are different" may mean "A and B are different from each other". It should be noted that the term may also mean that "A and B are each different from C". The same way of interpretation as this way for the term "different" should be applied to each of terms such as "separated", "coupled" and the like.

Each embodiment described in the present disclosure may be used alone, may be used in combination, or may be switched with another appropriately when being actually implemented. In addition, notification of predetermined information (for example, notification of "it being X") is not limited to being performed explicitly, and may be performed implicitly (for example, by avoiding notification of the predetermined information).

Note that in the present disclosure, n + T_B is an example of the end timing of slots that are targets of partial sensing, n + T_C is an example of a timing of resource selection. T_y1 is an example of the beginning timing of one or more slots that are candidates.

Although the present disclosure has been described in detail above, it is apparent to those skilled in the art that the present disclosure is not limited to the embodiment described in the present disclosure. The present disclosure can be implemented as modified and changed embodiments without departing from the intent and scope of the present disclosure defined by the description of the claims. Accordingly, the description of the present disclosure is for an illustrative purpose, and in no way has a restrictive purpose with respect to the present disclosure.

[Description of Symbols]

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device

## Claims

**1.** A terminal comprising:

a reception unit configured to perform partial sensing in a resource pool;
a control unit configured to select one or more slots that are candidates for resource selection from a resource selection window in the resource pool; and
a transmission unit configured to select a resource that is used for transmission from the one or more slots that are the candidates based on a result of the partial sensing,
wherein

the control unit is configured to control an end timing of slots that are targets of the partial sensing, a timing at which the transmission unit selects the resource, and a beginning timing of the one or more slots that are the candidates.

**2.** The terminal as claimed in claim 1,
wherein
the control unit is configured to determine the end timing of the slots that are the targets of the partial sensing based on the beginning timing of the one or more slots that are the candidates.

**3.** The terminal as claimed in claim 1,
wherein
the control unit is configured to determine the end timing of the slots that are the targets of the partial sensing based on the timing at which the transmission unit selects the resource.

**4.** The terminal as claimed in claim 1,
wherein
the control unit is configured to determine the timing at which the transmission unit selects the resource based on the beginning timing of the one or more slots that are the candidates.

**5.** The terminal as claimed in claim 1,
wherein
the control unit is configured to determine the beginning timing of the one or more slots that are the candidates based on the end timing of the slots that are the targets of the partial sensing.

**6.** A communication method comprising:

a receiving step of performing partial sensing in a resource pool;
a control step of selecting one or more slots that are candidates for resource selection from a resource selection window in the resource pool;
a transmitting step of selecting a resource that is used for transmission from the one or more slots that are the candidates based on a result of the partial sensing; and
a step of controlling an end timing of slots that are targets of the partial sensing, a timing of selecting the resource, and a beginning timing of the one or more slots that are the candidates.

FIG.1

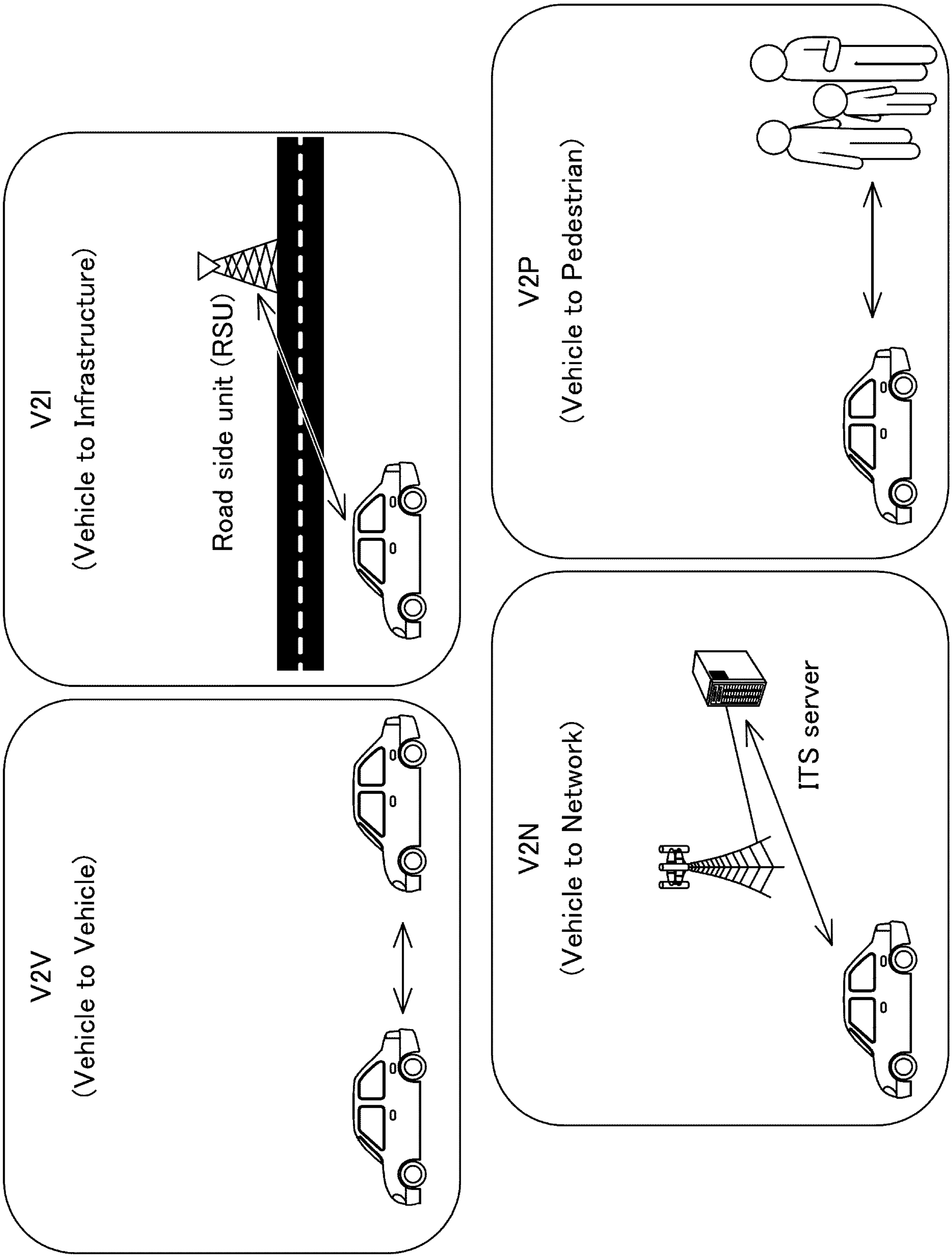
V2V
(Vehicle to Vehicle)
V2I
(Vehicle to Infrastructure)
Road side unit (RSU)
V2N
(Vehicle to Network)
ITS server
V2P
(Vehicle to Pedestrian)

FIG.2

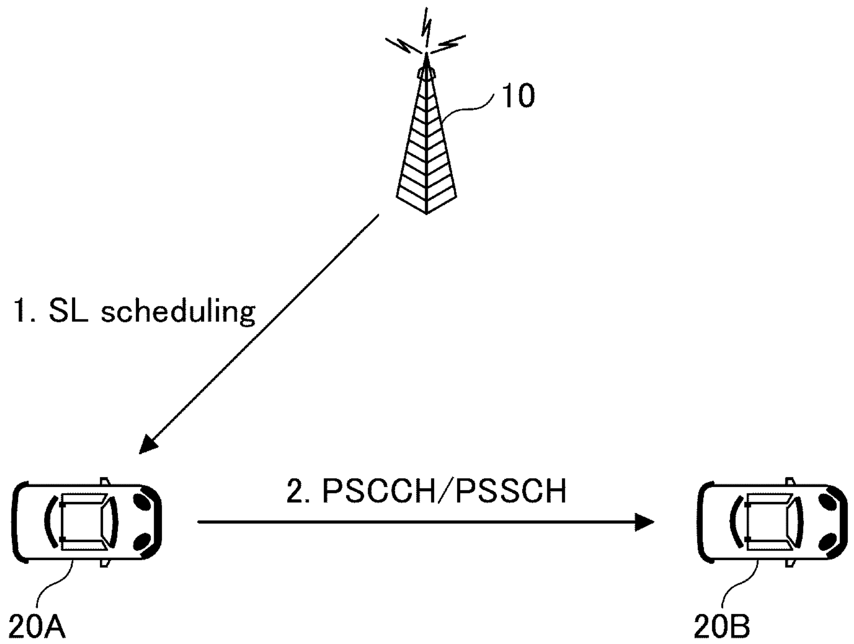


FIG.3

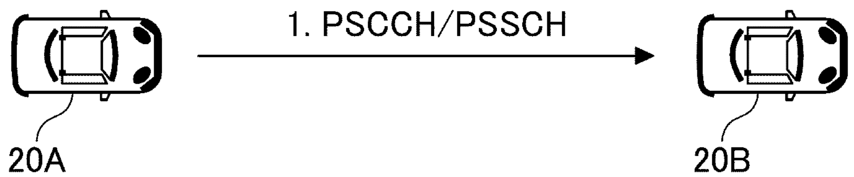


FIG.4

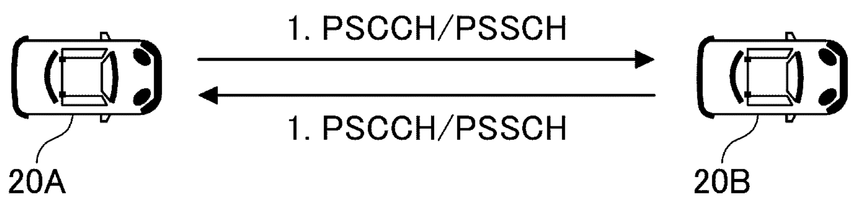

FIG.5

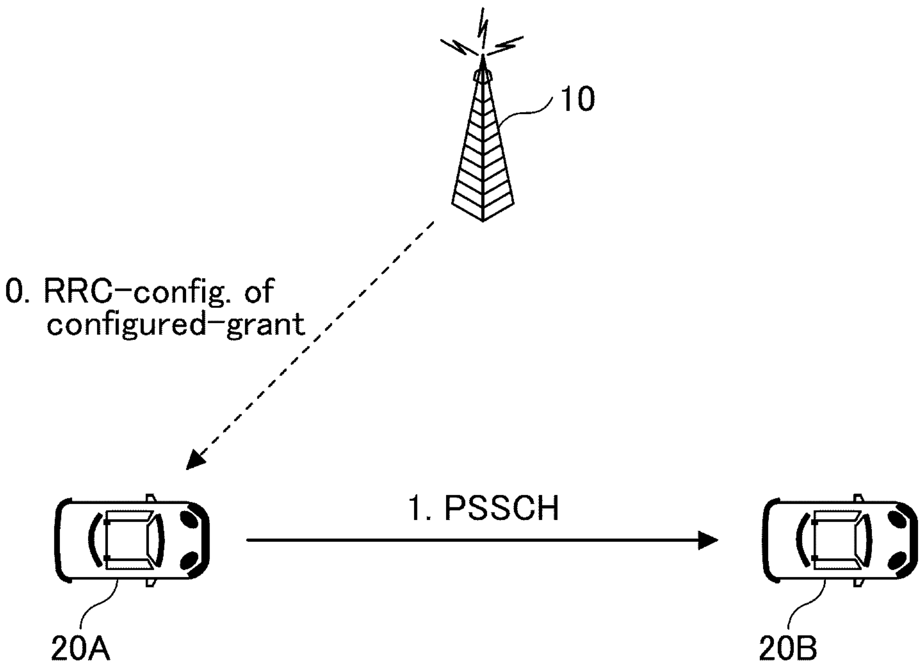
10
0. RRC-config. of
configured-grant
1. PSSCH
20A
20B

FIG.6

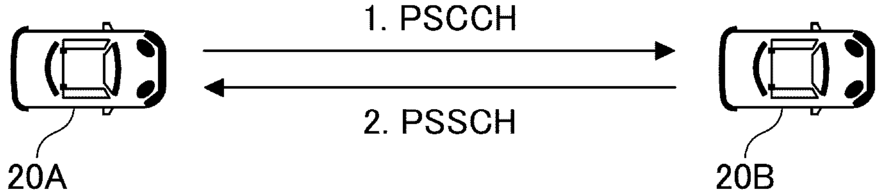
1. PSCCH
2. PSSCH
20A
20B

FIG.7

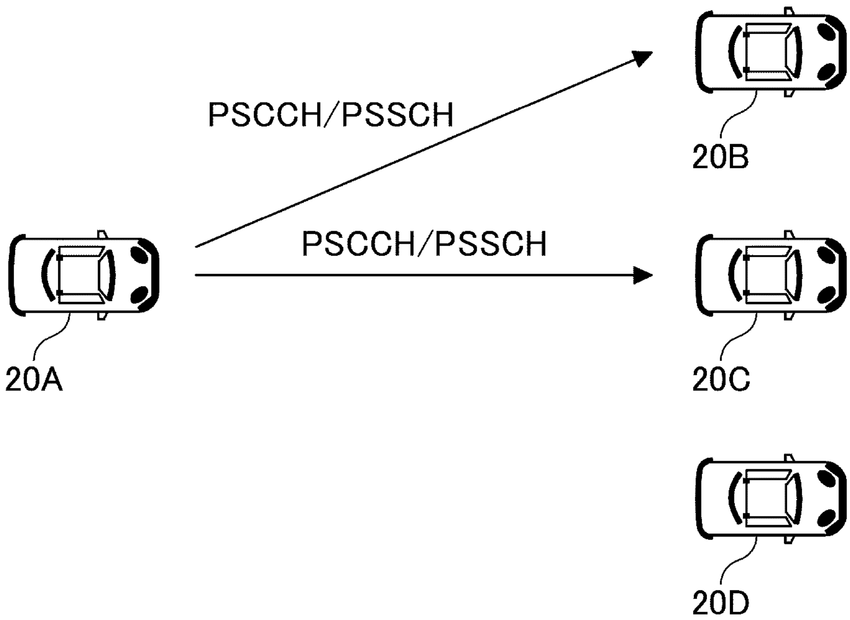
PSCCH/PSSCH
PSCCH/PSSCH
20A
20B
20C
20D

FIG.8

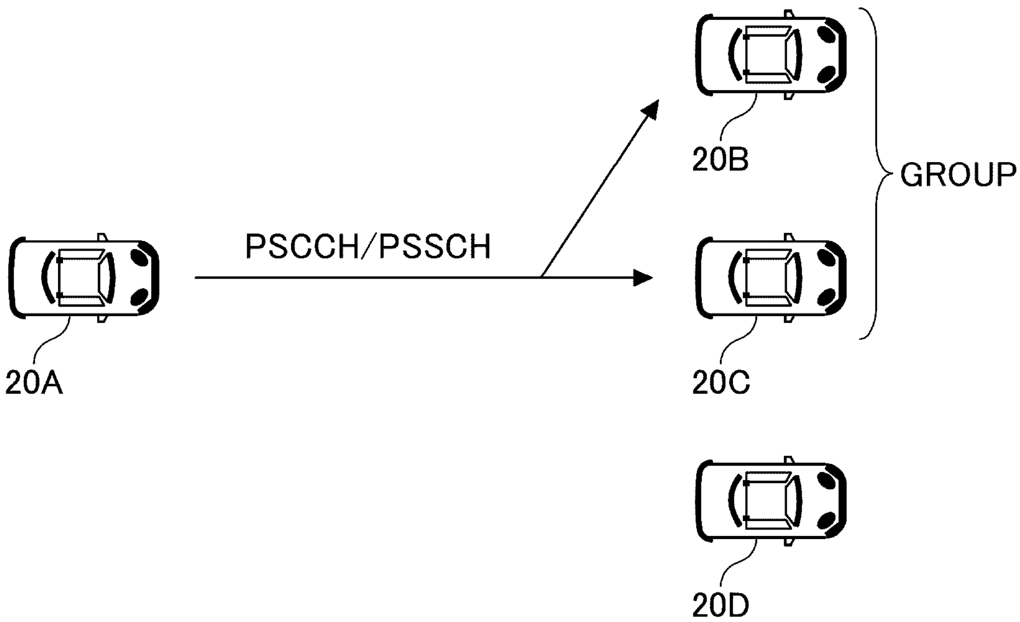
PSCCH/PSSCH
20A
20B
20C
20D
GROUP

FIG.9

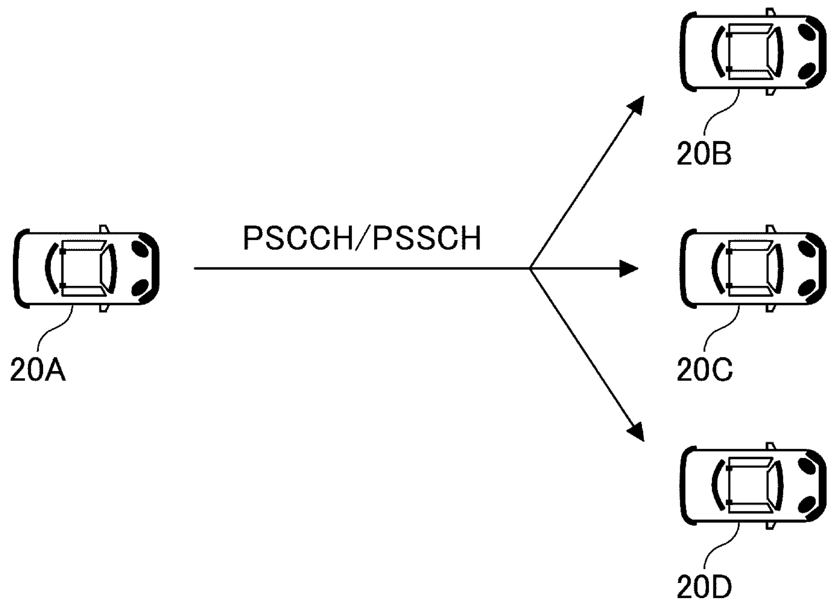


FIG.10

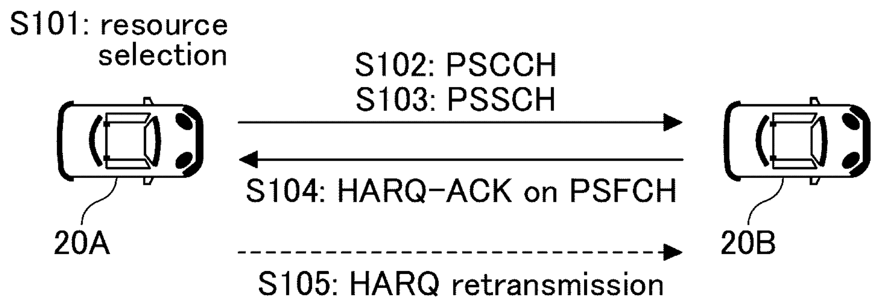


FIG.11

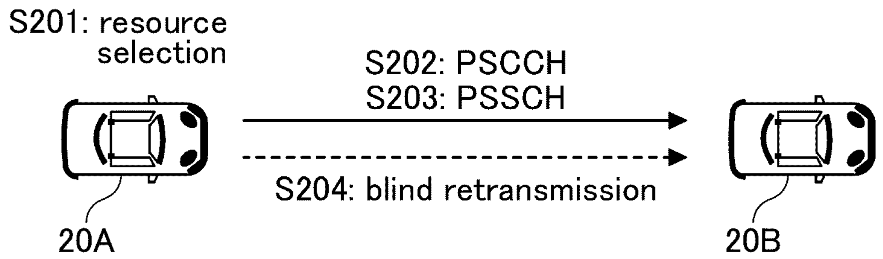

FIG.12

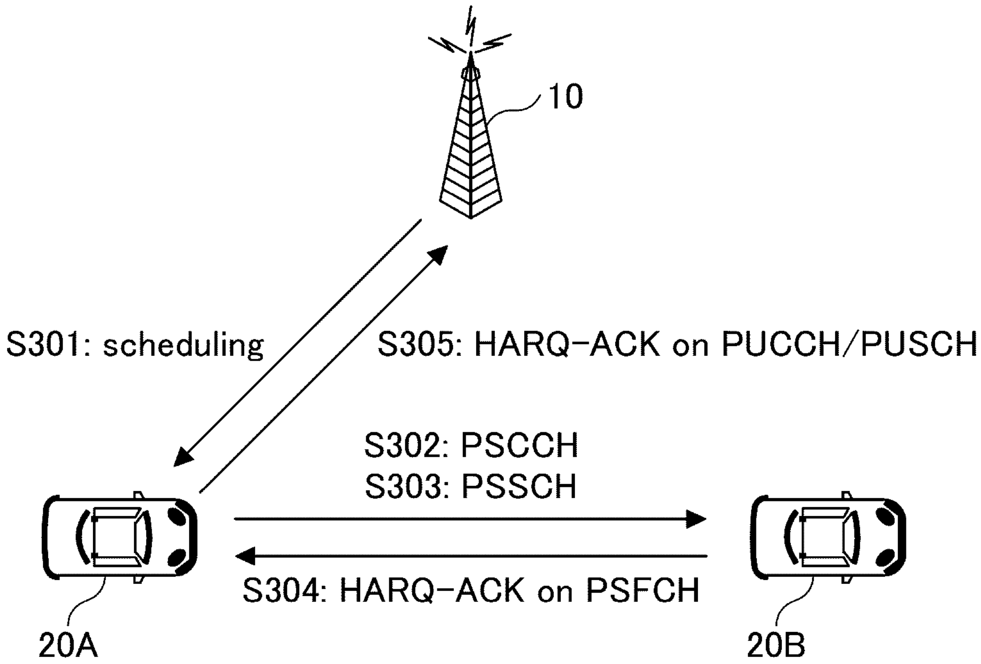
10
S301: scheduling
S305: HARQ-ACK on PUCCH/PUSCH
S302: PSCCH
S303: PSSCH
S304: HARQ-ACK on PSFCH
20A
20B

FIG.13

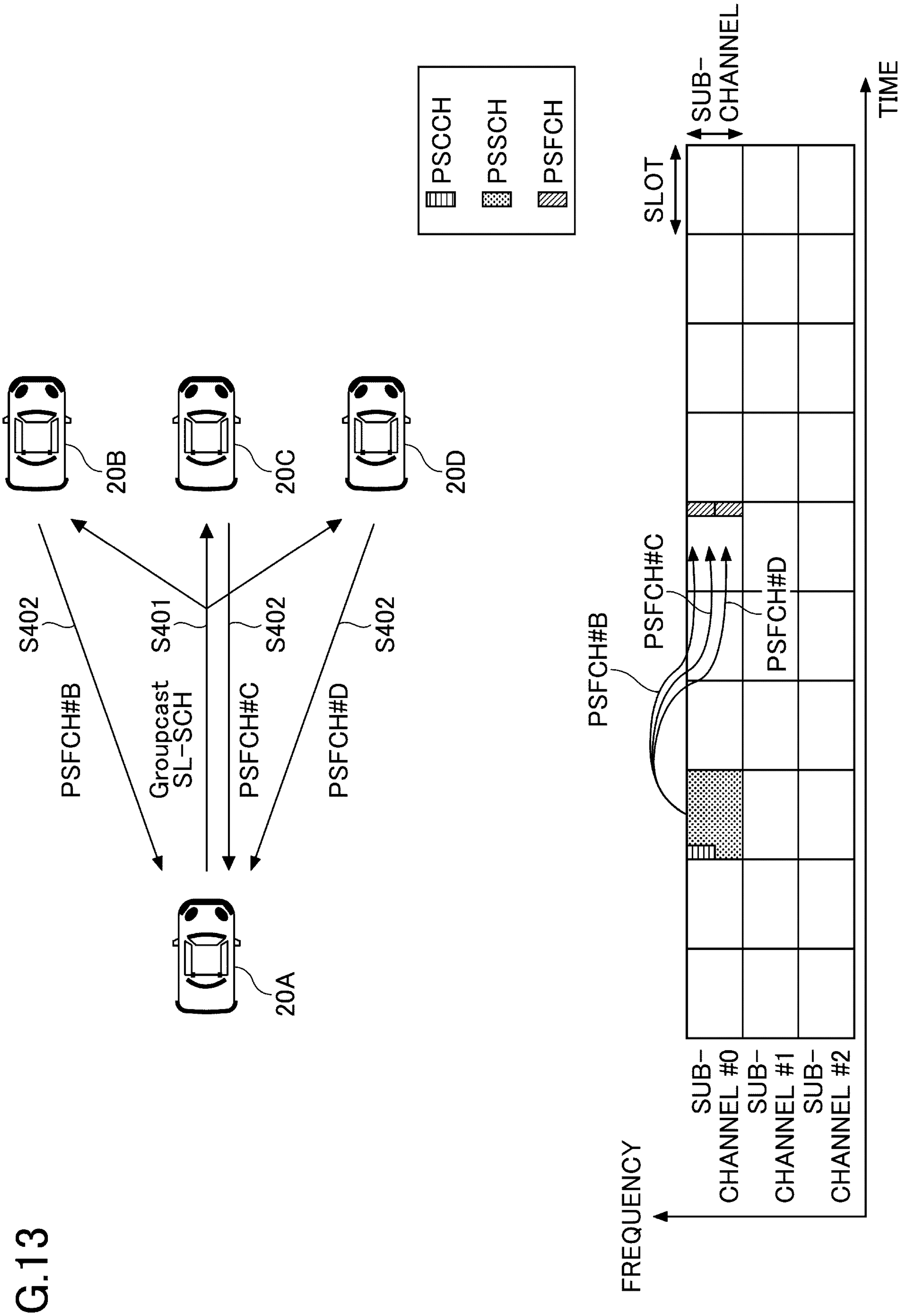
20A
20B
20C
20D
S401
S402
Groupcast SL-SCH
PSFCH#B
PSFCH#C
PSFCH#D
PSCCH
PSSCH
PSFCH
SLOT
SUB-CHANNEL
TIME
FREQUENCY
SUB-CHANNEL #0
SUB-CHANNEL #1
SUB-CHANNEL #2

FIG.14

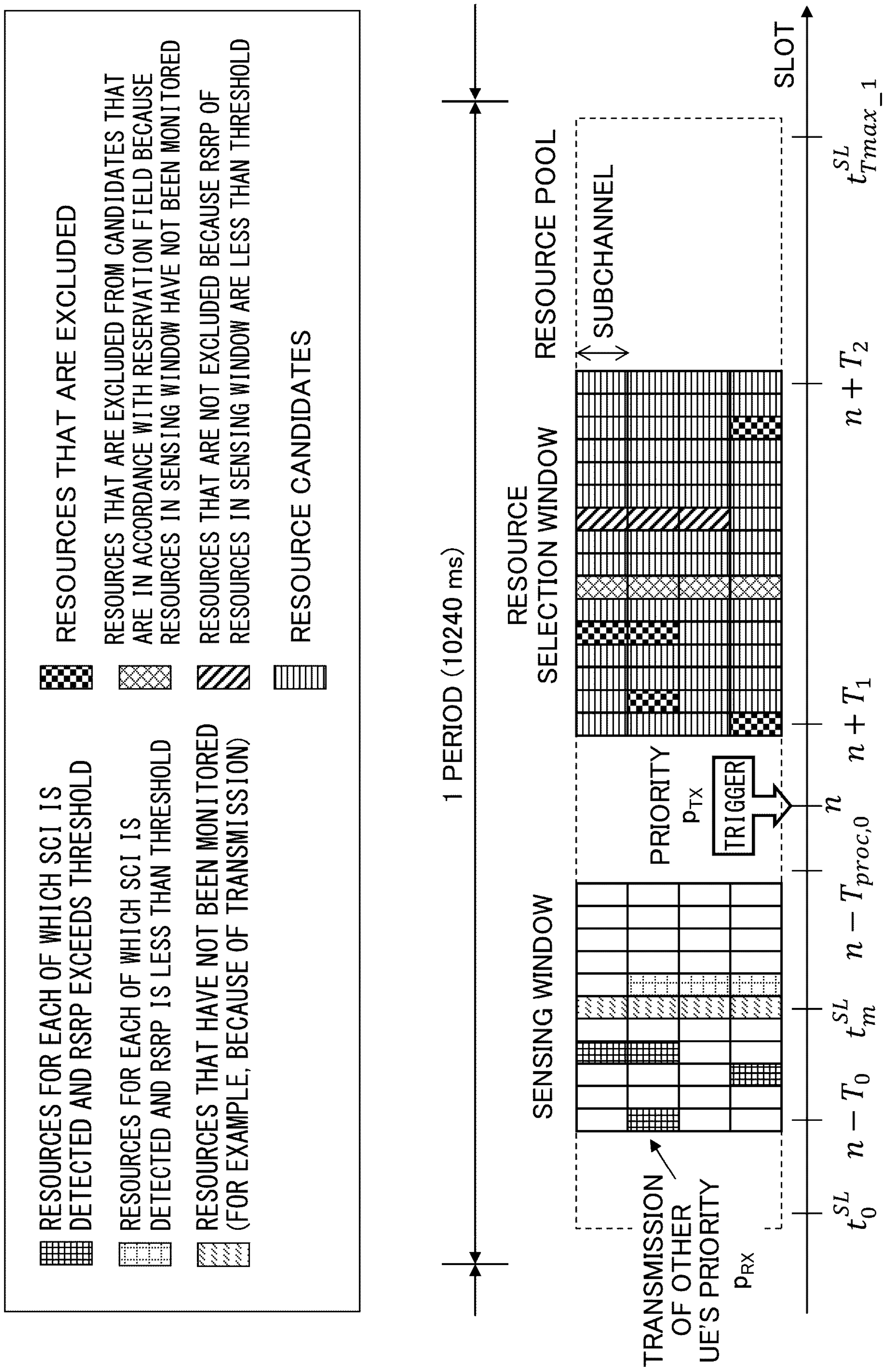

RESOURCES FOR EACH OF WHICH SCI IS DETECTED AND RSRP EXCEEDS THRESHOLD
RESOURCES FOR EACH OF WHICH SCI IS DETECTED AND RSRP IS LESS THAN THRESHOLD
RESOURCES THAT HAVE NOT BEEN MONITORED (FOR EXAMPLE, BECAUSE OF TRANSMISSION)
RESOURCES THAT ARE EXCLUDED
RESOURCES THAT ARE EXCLUDED FROM CANDIDATES THAT ARE IN ACCORDANCE WITH RESERVATION FIELD BECAUSE RESOURCES IN SENSING WINDOW HAVE NOT BEEN MONITORED
RESOURCES THAT ARE NOT EXCLUDED BECAUSE RSRP OF RESOURCES IN SENSING WINDOW ARE LESS THAN THRESHOLD
RESOURCE CANDIDATES
1 PERIOD (10240 ms)
SENSING WINDOW
RESOURCE SELECTION WINDOW
RESOURCE POOL
SUBCHANNEL
PRIORITY $p_{TX}$
TRIGGER
TRANSMISSION OF OTHER UE'S PRIORITY $p_{RX}$
SLOT
$t_0^{SL}$
$n-T_0$
$t_m^{SL}$
$n-T_{proc,0}$
$n$
$n+T_1$
$n+T_2$
$t_{Tmax_1}^{SL}$

FIG.15

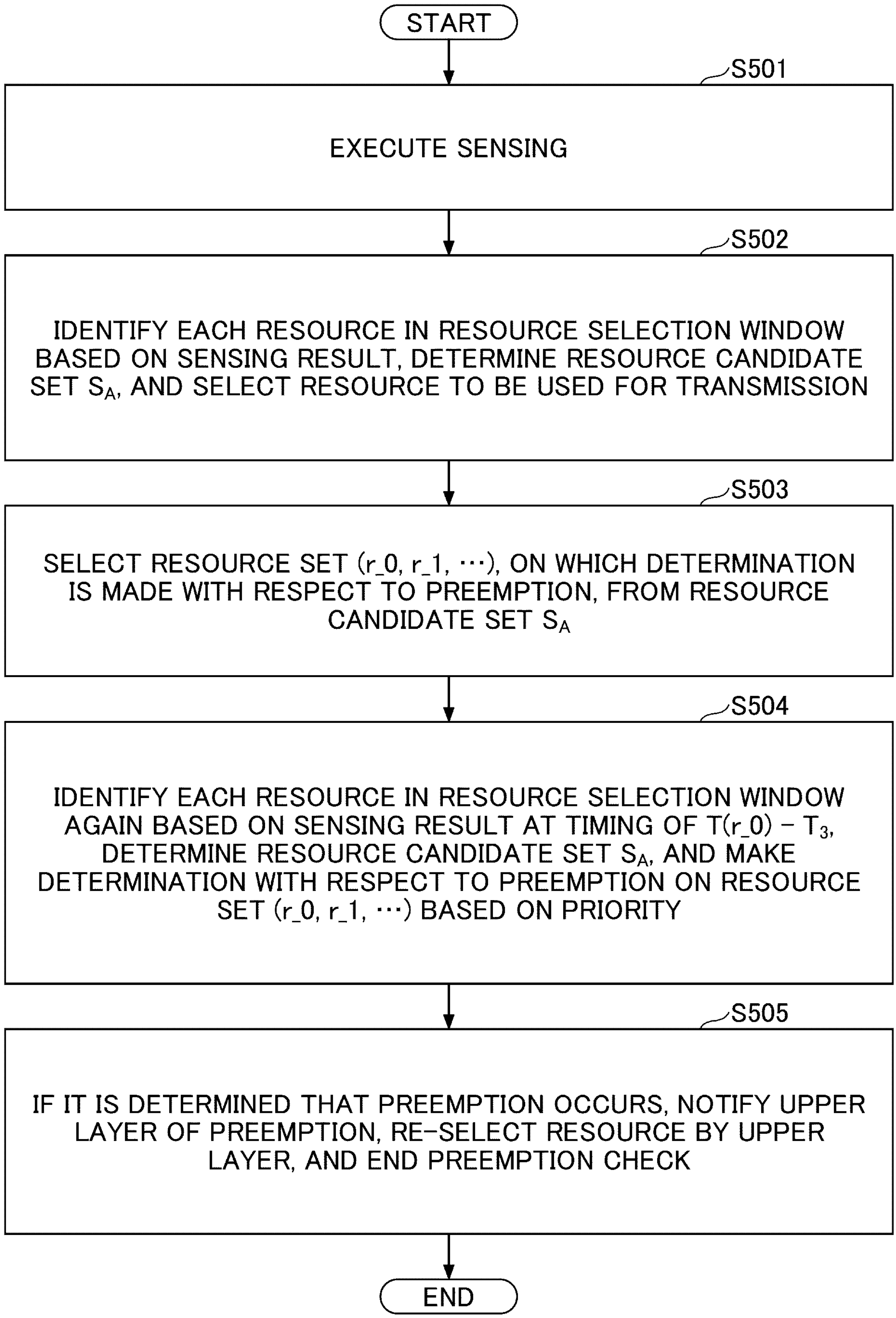
START
S501
EXECUTE SENSING
S502
IDENTIFY EACH RESOURCE IN RESOURCE SELECTION WINDOW BASED ON SENSING RESULT, DETERMINE RESOURCE CANDIDATE SET $S_A$, AND SELECT RESOURCE TO BE USED FOR TRANSMISSION
S503
SELECT RESOURCE SET (r_0, r_1, ···), ON WHICH DETERMINATION IS MADE WITH RESPECT TO PREEMPTION, FROM RESOURCE CANDIDATE SET $S_A$
S504
IDENTIFY EACH RESOURCE IN RESOURCE SELECTION WINDOW AGAIN BASED ON SENSING RESULT AT TIMING OF $T(r_0) - T_3$, DETERMINE RESOURCE CANDIDATE SET $S_A$, AND MAKE DETERMINATION WITH RESPECT TO PREEMPTION ON RESOURCE SET (r_0, r_1, ···) BASED ON PRIORITY
S505
IF IT IS DETERMINED THAT PREEMPTION OCCURS, NOTIFY UPPER LAYER OF PREEMPTION, RE-SELECT RESOURCE BY UPPER LAYER, AND END PREEMPTION CHECK
END

FIG.16

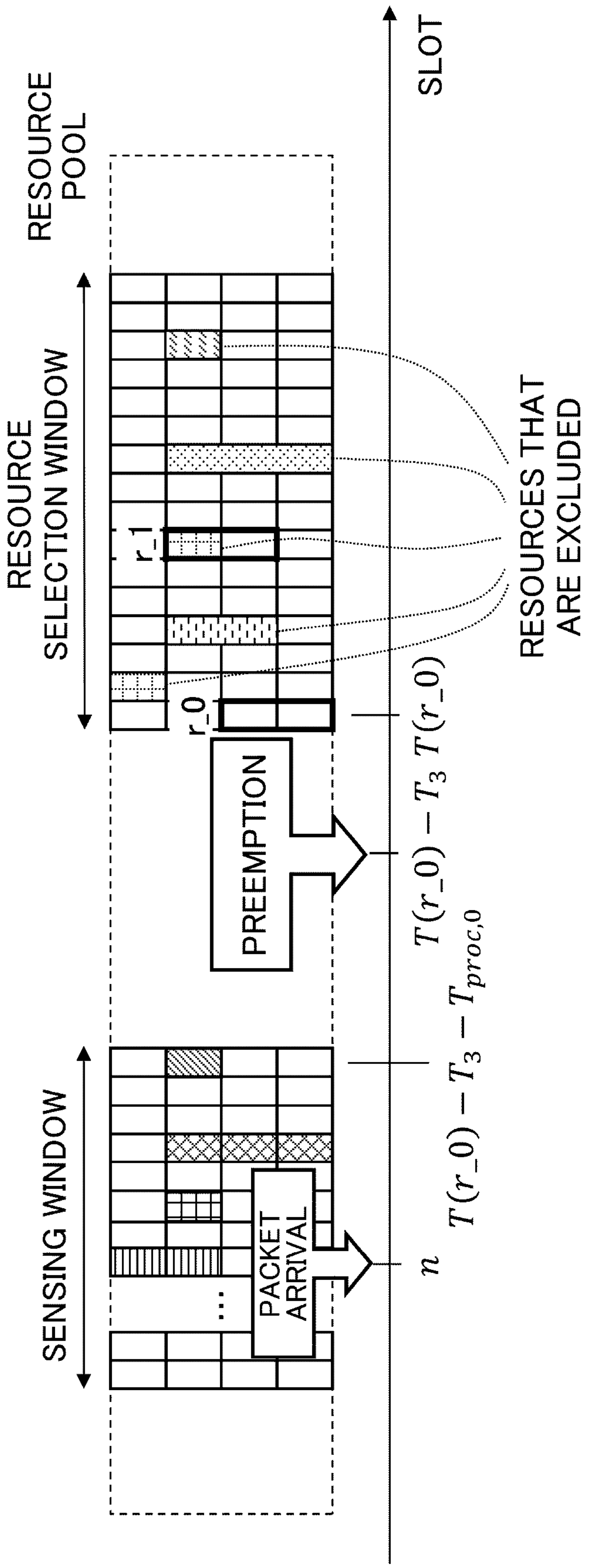
RESOURCE POOL
SLOT
RESOURCE SELECTION WINDOW
SENSING WINDOW
RESOURCES THAT ARE EXCLUDED
r_1
r_0
PREEMPTION
PACKET ARRIVAL
...
$n$
$T(r_0) - T_3 - T_{proc,0}$
$T(r_0) - T_3$
$T(r_0)$

FIG.17

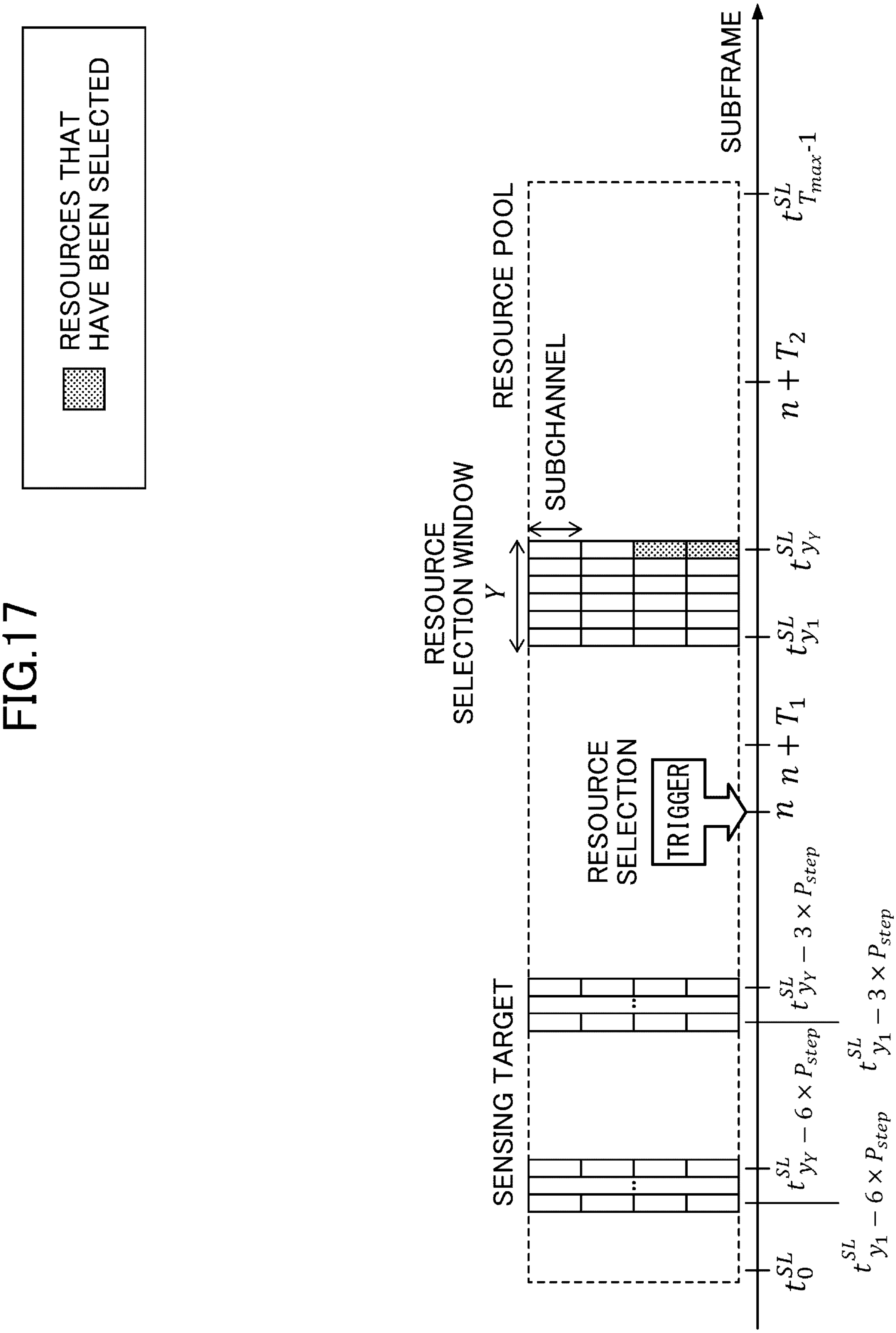
RESOURCES THAT HAVE BEEN SELECTED
RESOURCE POOL
RESOURCE SELECTION WINDOW
Y
SUBCHANNEL
SENSING TARGET
RESOURCE SELECTION
TRIGGER
SUBFRAME
$t_0^{SL}$
$t_{y_1}^{SL} - 6 \times P_{step}$
$t_{y_Y}^{SL} - 6 \times P_{step}$
$t_{y_1}^{SL} - 3 \times P_{step}$
$t_{y_Y}^{SL} - 3 \times P_{step}$
$n$
$n + T_1$
$t_{y_1}^{SL}$
$t_{y_Y}^{SL}$
$n + T_2$
$t_{T_{max}}^{SL}$-1

FIG.18

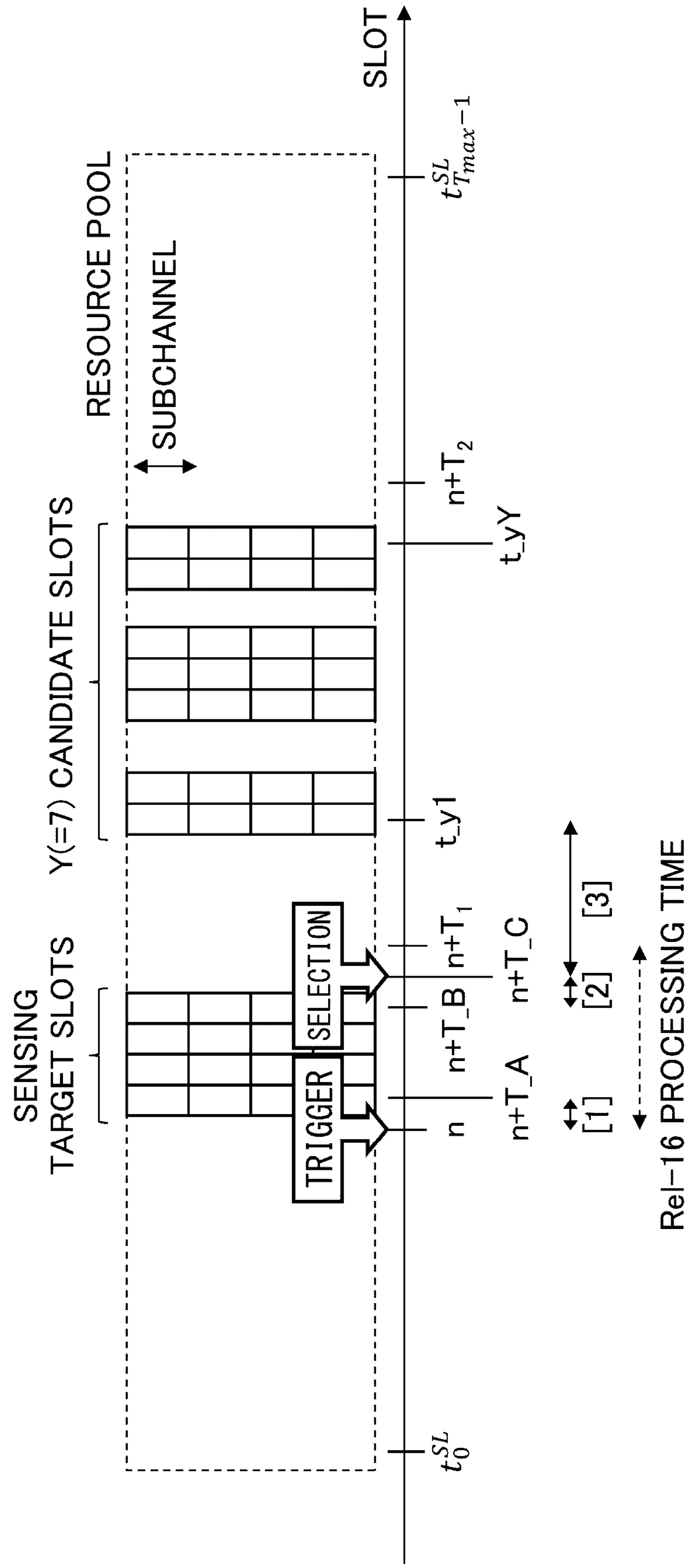
SENSING
TARGET SLOTS
Y(=7) CANDIDATE SLOTS
RESOURCE POOL
SUBCHANNEL
SLOT
TRIGGER
SELECTION
n
n+T_A
n+T_B
n+T_C
n+T1
t_y1
t_yY
n+T2
t0SL
tTmax-1SL
[1]
[2]
[3]
Rel-16 PROCESSING TIME

FIG.19

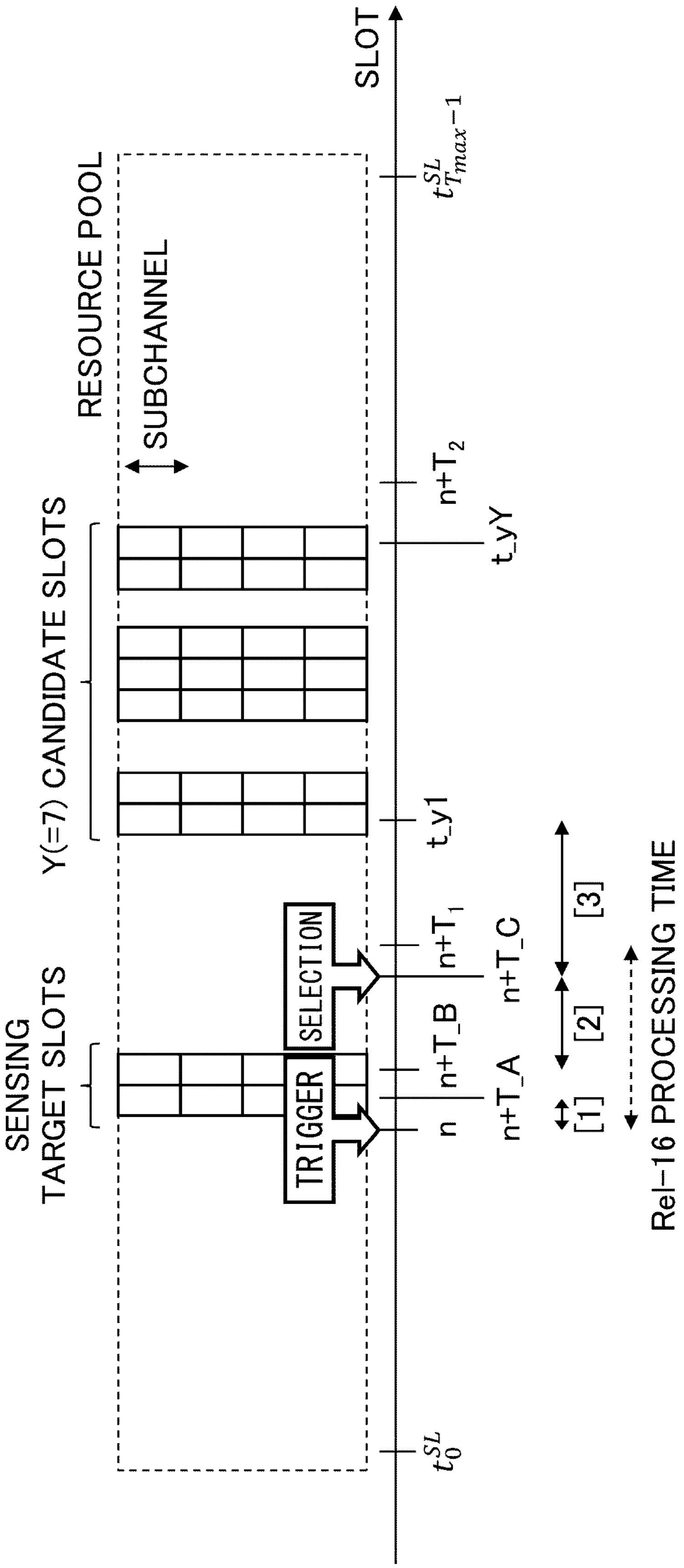
SLOT
RESOURCE POOL
SUBCHANNEL
Y(=7) CANDIDATE SLOTS
SENSING
TARGET SLOTS
TRIGGER
SELECTION
$t_0^{SL}$
n
n+T_A
n+T_B
n+T_C
$n+T_1$
t_y1
t_yY
$n+T_2$
$t_{T_{max}-1}^{SL}$
[1]
[2]
[3]
Rel−16 PROCESSING TIME

FIG.20

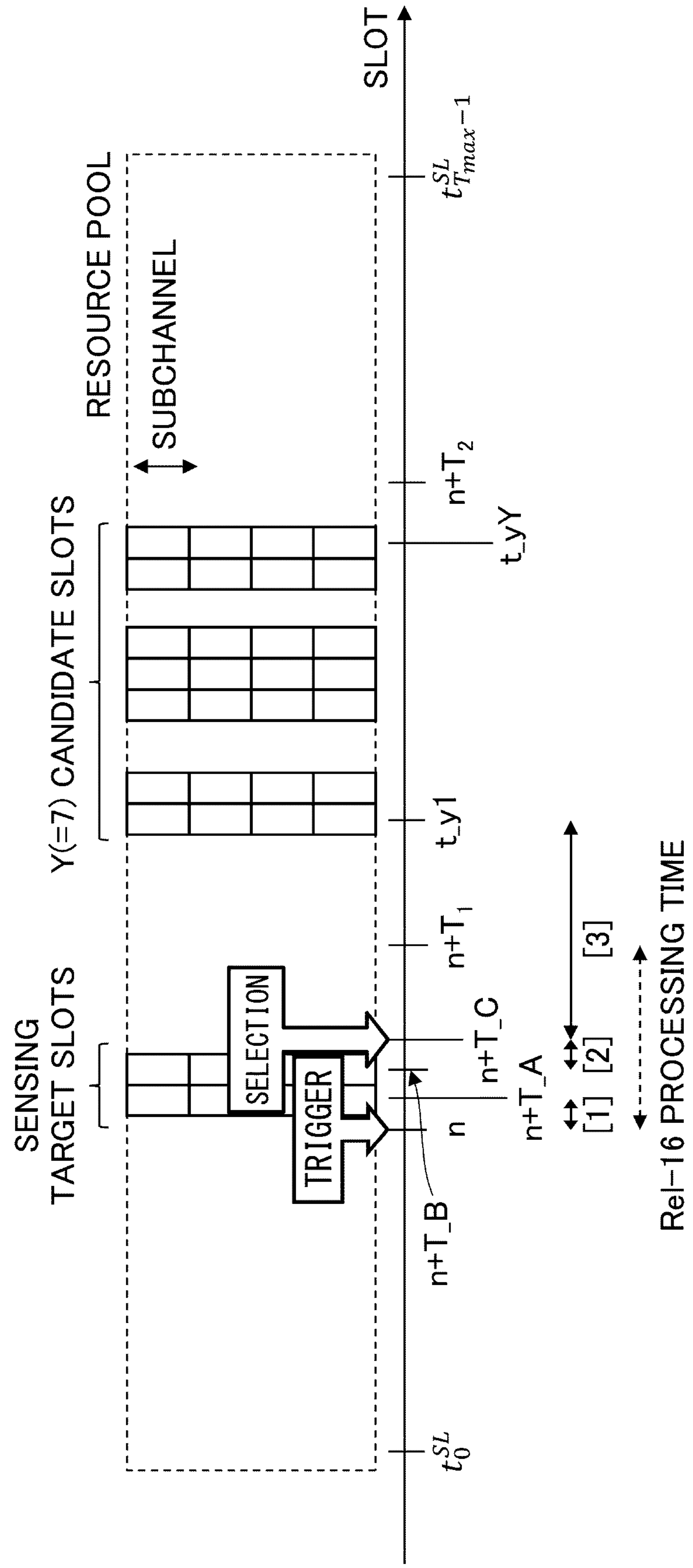
SLOT
RESOURCE POOL
SUBCHANNEL
Y(=7) CANDIDATE SLOTS
SENSING TARGET SLOTS
SELECTION
TRIGGER
$t_0^{SL}$
$t_{T_{max}-1}^{SL}$
n
n+T_A
n+T_B
n+T_C
$n+T_1$
$n+T_2$
t_y1
t_yY
[1]
[2]
[3]
Rel-16 PROCESSING TIME

FIG.21

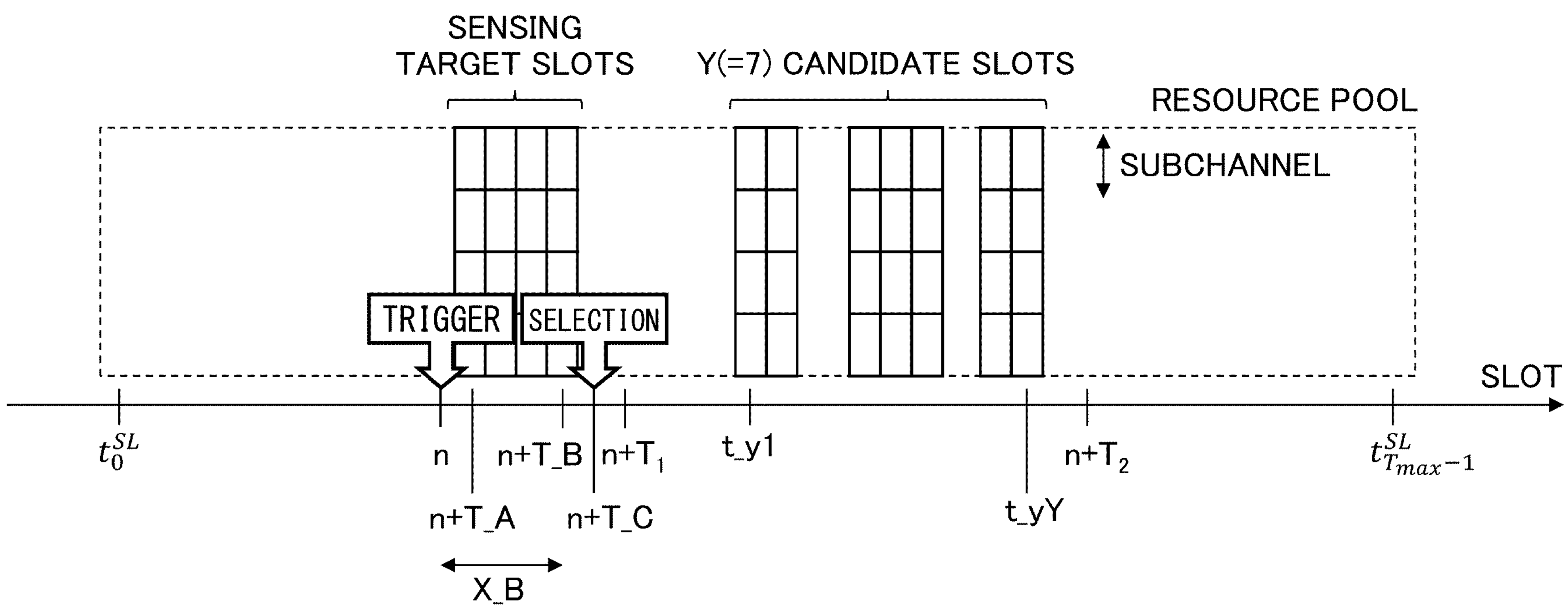
SENSING
TARGET SLOTS
Y(=7) CANDIDATE SLOTS
RESOURCE POOL
SUBCHANNEL
TRIGGER
SELECTION
SLOT
$t_0^{SL}$
n
n+T_A
n+T_B
n+T_C
$n+T_1$
t_y1
t_yY
$n+T_2$
$t_{T_{max}-1}^{SL}$
X_B

FIG.22

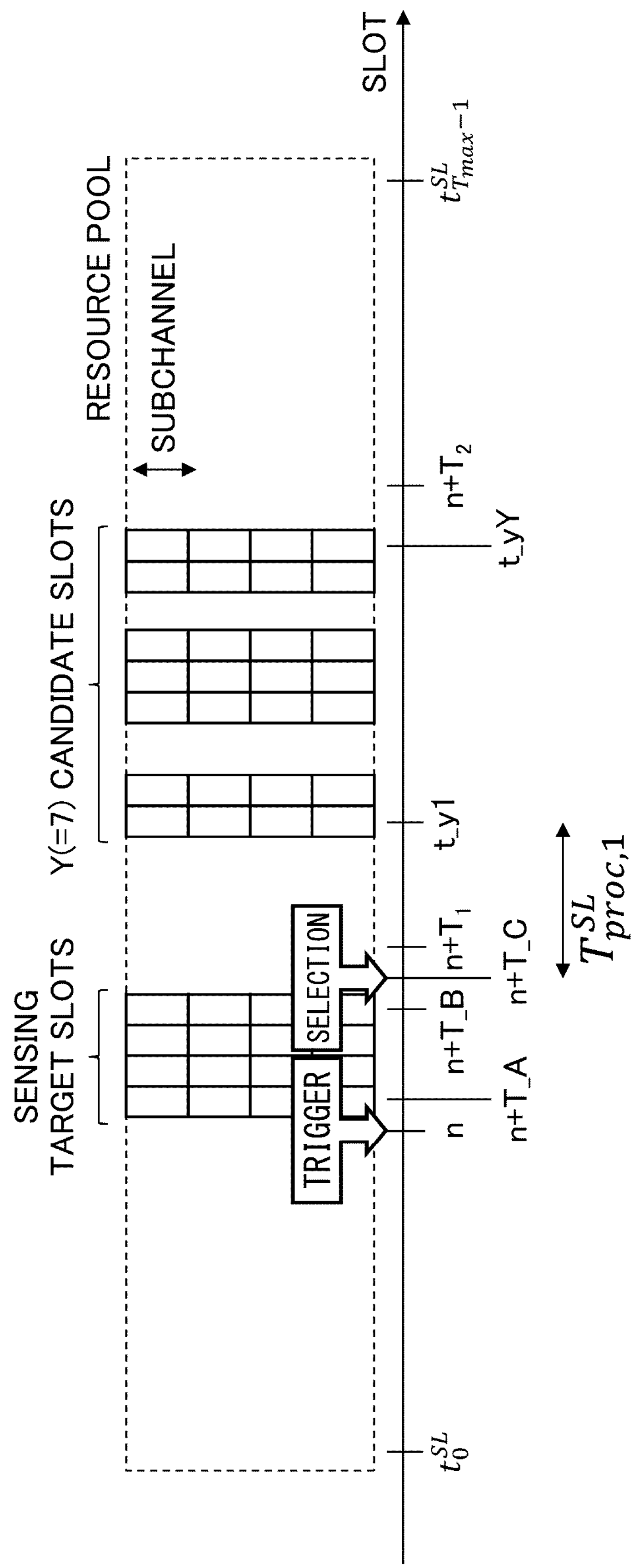
SLOT
RESOURCE POOL
SUBCHANNEL
Y(=7) CANDIDATE SLOTS
SENSING TARGET SLOTS
TRIGGER
SELECTION
$t_{T_{max}-1}^{SL}$
$n+T_2$
t_yY
t_y1
$n+T_1$
n+T_C
n+T_B
n+T_A
n
$t_0^{SL}$
$T_{proc,1}^{SL}$

FIG.23

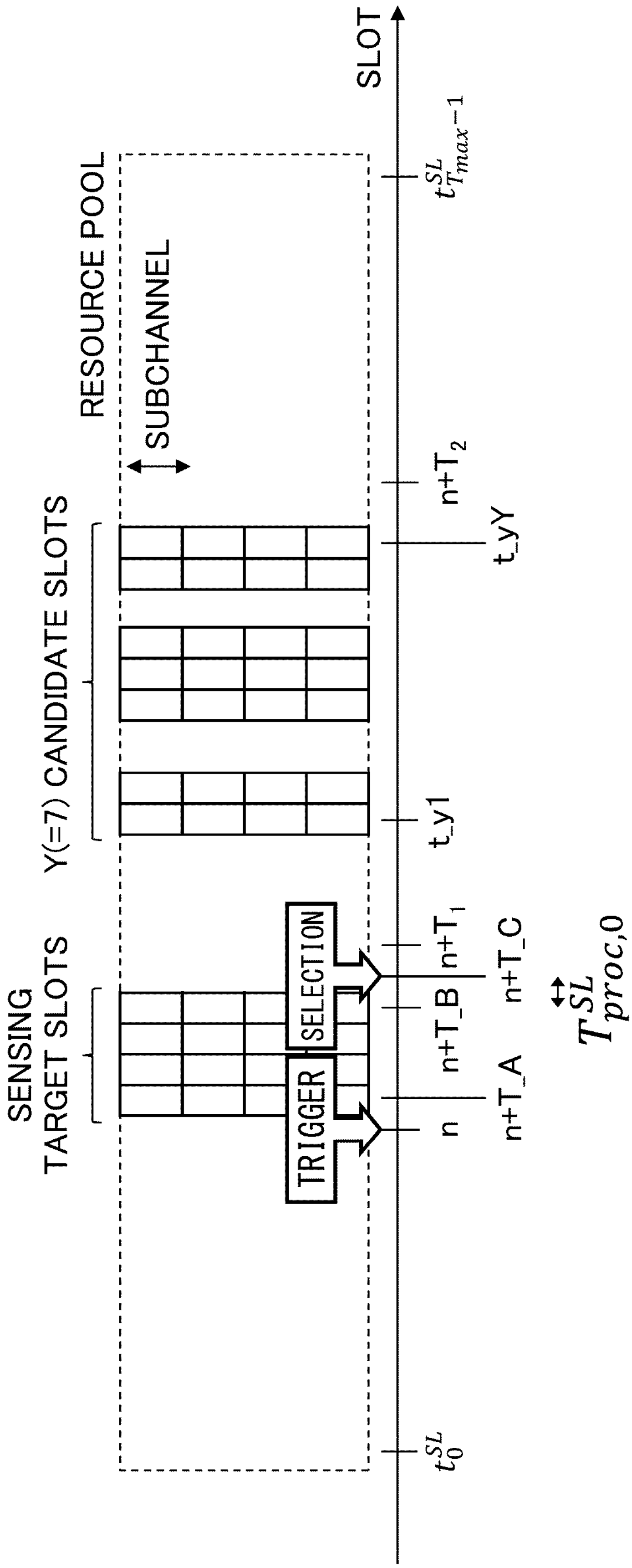
SLOT
RESOURCE POOL
SUBCHANNEL
Y(=7) CANDIDATE SLOTS
SENSING
TARGET SLOTS
TRIGGER
SELECTION
$t_0^{SL}$
n
n+T_A
n+T_B
n+T_C
$n+T_1$
$T_{proc,0}^{SL}$
t_y1
t_yY
$n+T_2$
$t_{T_{max}-1}^{SL}$

FIG.24

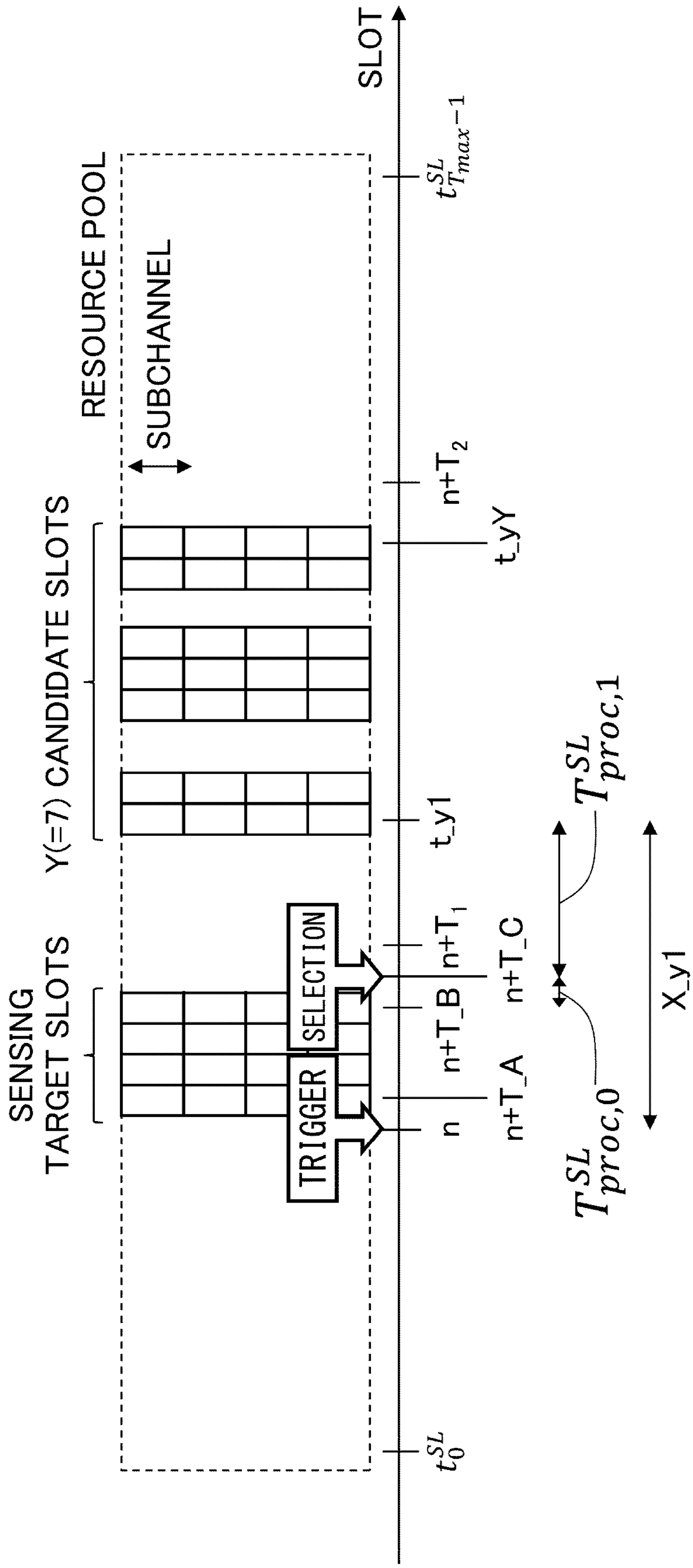
SLOT
RESOURCE POOL
SUBCHANNEL
Y(=7) CANDIDATE SLOTS
SENSING TARGET SLOTS
TRIGGER
SELECTION
n
n+T_A
n+T_B
n+T_C
n+T_1
t_y1
t_yY
n+T_2
$t_0^{SL}$
$t_{T_{max}-1}^{SL}$
$T_{proc,0}^{SL}$
$T_{proc,1}^{SL}$
X_y1

FIG.25

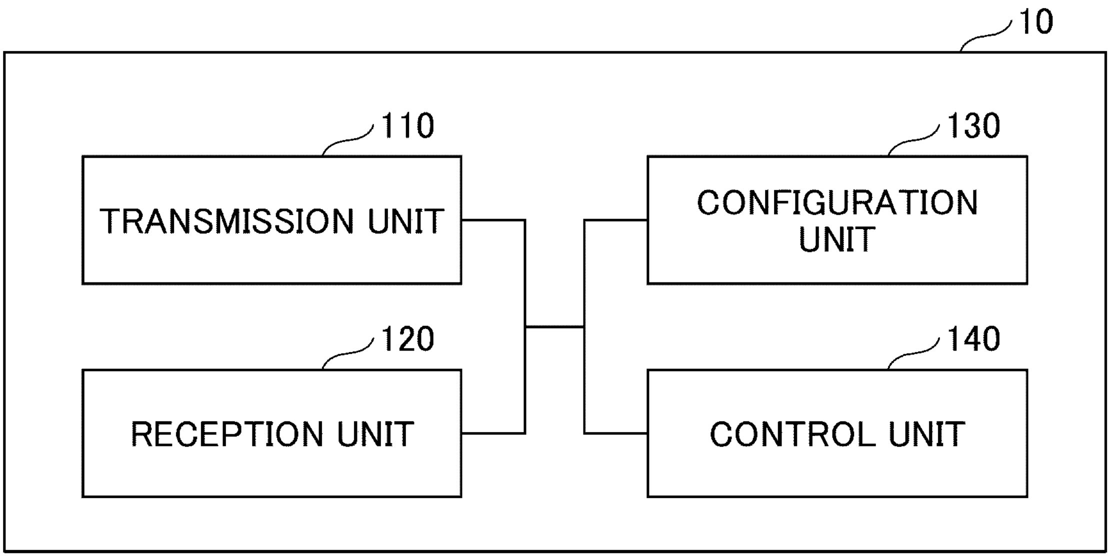
10
110
TRANSMISSION UNIT
120
RECEPTION UNIT
130
CONFIGURATION UNIT
140
CONTROL UNIT

FIG.26

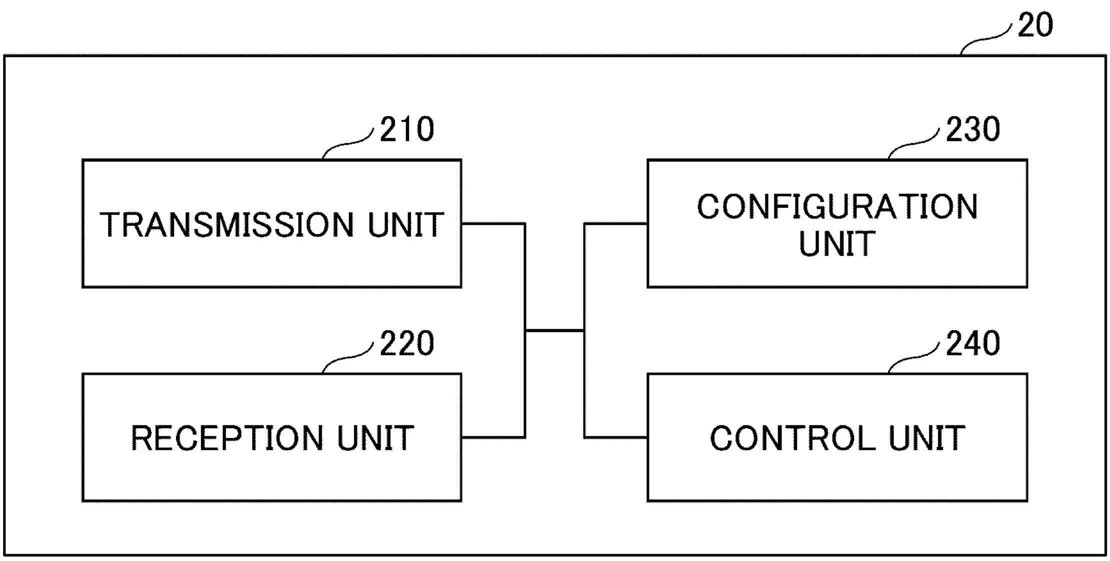
20
210
TRANSMISSION UNIT
220
RECEPTION UNIT
230
CONFIGURATION UNIT
240
CONTROL UNIT

FIG.27

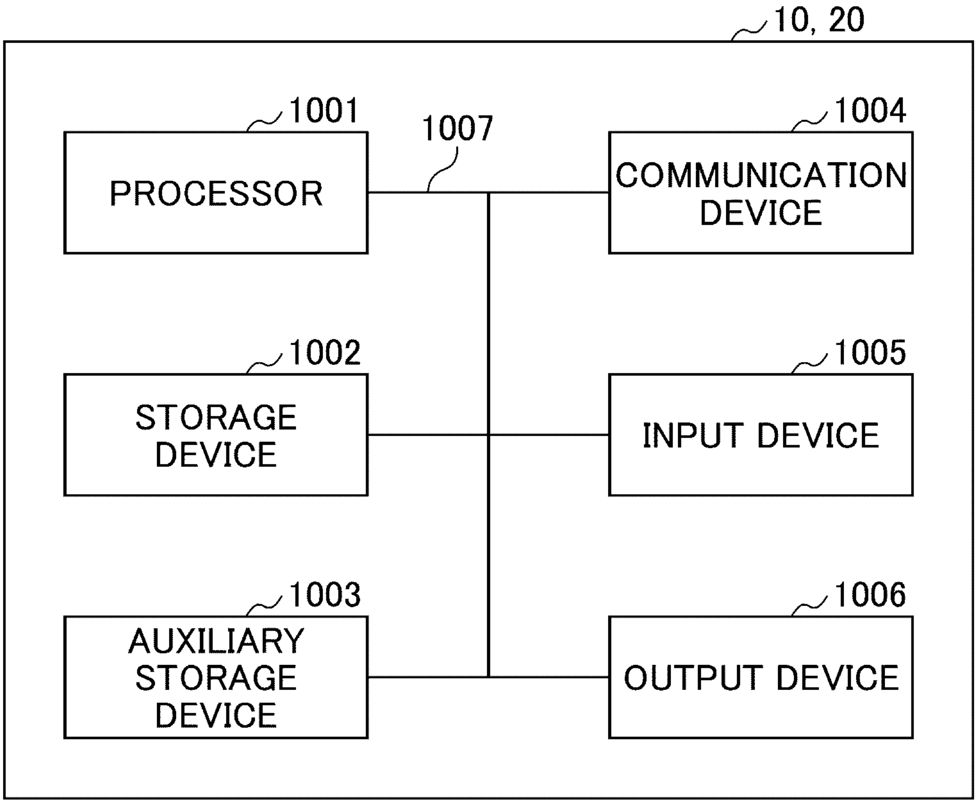
10, 20
1001
PROCESSOR
1007
1004
COMMUNICATION DEVICE
1002
STORAGE DEVICE
1005
INPUT DEVICE
1003
AUXILIARY STORAGE DEVICE
1006
OUTPUT DEVICE

**INTERNATIONAL SEARCH REPORT**

International application No.
PCT/JP2021/013116

A. CLASSIFICATION OF SUBJECT MATTER
H04W 72/02(2009.01)i; H04W 72/04(2009.01)i
FI: H04W72/02; H04W72/04 131
According to International Patent Classification (IPC) or to both national classification and IPC

B. FIELDS SEARCHED

Minimum documentation searched (classification system followed by classification symbols)
H04W4/00-99/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | NTT DOCOMO, INC. Discussion on sidelink resource allocation for power saving[online]. 3GPP TSG RAN WG1 #104-e R1-2101630, 19 January 2021, [retrieval date 16 August 2021], Internet<URL:https://www.3gpp.org/ftp/tsg_ran/WG1_RL1/TSGR1_104-e/Docs/R1-2101630.zip> pp.1-14 | 1, 3, 6<br>2, 4-5 |
| Y | APPLE. Sidelink Resource Allocation for Power Saving[online]. 3GPP TSG RAN WG1 #104-e R1-2101357, 18 January 2021, [retrieval date 16 August 2021], Internet<URL:https://www.3gpp.org/ftp/tsg_ran/WG1_RL1/TSGR1_104-e/Docs/R1-2101357.zip> pp. 1-7 | 2, 5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 August 2021 (18.08.2021) | 31 August 2021 (31.08.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2021/013116

C (Continuation). DOCUMENTS CONSIDERED TO BE RELEVANT

| Category* | Citation of document, with indication, where appropriate, of the relevant passages | Relevant to claim No. |
|---|---|---|
| Y | SHARP. Discussion on resource allocation for power saving[online]. 3GPP TSG RAN WG1 #104-e R1-2101550, 19 January 2021, [retrieval date 16 August 2021], Internet<URL:https://www.3gpp.org/ftp/tsg_ran/WG1_RL1/TSGR1_104-e/Docs/R1-2101550.zip> pp. 1-6 | 4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *3GPP TS 38.211 V16. 4.0,* December 2020
- *3GPP TR 22.886 V15. 1.0,* March 2017